(19) Europäisches Patentamt
European Patent Office
Office européen des brevets

(11) **EP 3 205 697 B1**

(12) **EUROPEAN PATENT SPECIFICATION**

(45) Date of publication and mention
of the grant of the patent:
**04.12.2024 Bulletin 2024/49**

(21) Application number: **15848893.2**

(22) Date of filing: **01.10.2015**

(51) International Patent Classification (IPC):
*C09J 7/22* (2018.01)   *C09J 7/38* (2018.01)
*C09J 107/00* (2006.01)   *C25D 11/00* (2006.01)
*C25D 11/02* (2006.01)

(52) Cooperative Patent Classification (CPC):
**C09J 7/22; C09J 7/383; C09J 107/00; C25D 11/00;
C25D 11/02; C25D 11/022;** C09J 2203/31

(86) International application number:
**PCT/JP2015/077994**

(87) International publication number:
**WO 2016/056469 (14.04.2016 Gazette 2016/15)**

(54) **USE OF A MASKING SHEET FOR CHEMICAL SOLUTION TREATMENT**

VERWENDUNG EINER ABDECKFOLIE FÜR DIE CHEMISCHE LÖSUNGSBEHANDLUNG

UTILISATION D'UNE FEUILLE DE MASQUAGE POUR TRAITEMENT CHIMIQUE EN SOLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2014 JP 2014205587**

(43) Date of publication of application:
**16.08.2017 Bulletin 2017/33**

(73) Proprietor: **Nitto Denko Corporation
Ibaraki-shi, Osaka 567-8680 (JP)**

(72) Inventors:
• **MORITA, Kosuke
Ibaraki-shi
Osaka 567-8680 (JP)**
• **YAMAMOTO, Shuuhei
Ibaraki-shi
Osaka 567-8680 (JP)**
• **HIDA, Takafumi
Ibaraki-shi
Osaka 567-8680 (JP)**
• **MUTA, Shigeki
Ibaraki-shi
Osaka 567-8680 (JP)**
• **MATSUSHITA, Kiichiro
Ibaraki-shi
Osaka 567-8680 (JP)**

(74) Representative: **Grünecker Patent- und
Rechtsanwälte
PartG mbB
Leopoldstraße 4
80802 München (DE)**

(56) References cited:
JP-A- 2004 250 762   JP-A- 2007 231 340
JP-A- 2010 126 698   JP-A- 2011 148 943
JP-A- 2014 139 299   JP-A- H0 234 680
JP-B2- 3 738 038   US-A- 5 998 018
US-A1- 2010 252 192

**Description**

[Technical Field]

The present invention relates to a masking sheet for use in a treatment with a chemical solution (chemical solution treatment).

[Background Art]

For treating an article (or "processing object" hereinafter) with a chemical solution, masking techniques are known, where non-target areas for a treatment of the processing object are protected from the chemical solution with a pressure-sensitive adhesive (PSA) sheet applied to the non-target areas. Such a PSA sheet for chemical solution treatment, or simply a masking sheet hereinafter, typically comprises a film of a PSA (PSA layer) and a substrate supporting the PSA. Patent Document 1 discloses a PSA tape that comprises a metal foil substrate and can be preferably used for masking purposes.
JP2010126698A, JP3738038B2, JPH0234680A, US2010/252192A1 and US5998018A also disclose masking sheets.

[Citation List]

[Patent Literature]

[Patent Document 1] Japanese Patent Application Publication No. 2014-139299

[Summary of Invention]

[Technical Problem]

In typical, a masking sheet is designed to provide a desirable ability to prevent penetration of a chemical solution (or simply solution penetration hereinafter) in accordance with the purpose and way of use. However, even if a suitably-designed masking sheet is used, there may be cases where it falls short of the ability to prevent solution penetration because of unpredictable conditions such as failed application of the masking sheet, damage caused by incidental stress, and changes in chemical solution treatment conditions. With respect to a masking sheet using a metal foil substrate, as inconvenient as it is, whether or not it has properly prevented solution penetration cannot be checked until the masking sheet is removed after the chemical solution treatment,.

An objective of the present invention is thus to provide a masking sheet that allows easy assessment of solution penetration while the masking sheet is still adhered on a processing object.

[Solution to Problem]

The present invention provides the use of a masking sheet for chemical solution treatment in an anodizing process of a metal member in accordance with claim 1. Preferred embodiments are defined in claims 2 to 6. Further, the present invention provides a masking method for a chemical solution treatment, comprising using a masking sheet in an anodizing process of a metal member in accordance with claim 7.

An example of the CS treatment in which the masking sheet disclosed herein can be preferably used is anodizing (anodic oxidation) of a metal member. For instance, when anodizing a light metal member such as an aluminum member, the masking sheet is suitable for protecting a certain part of the light metal member from the anodizing solution.

The masking sheet disclosed herein may be preferably used, for instance, in an embodiment where it is applied to a surface subjected to shot peening (or a shot peened surface, hereinafter) of a metal member. In such an embodiment of use, the significance of the visual detectability of solution penetration into the masking sheet when inspected from the outer face is favorably obtained.

The masking sheet disclosed herein can be preferably used, for instance, in an embodiment where it is applied to a milled surface of a metal member. In such an embodiment of use, the significance of the visual detectability of solution penetration into the masking sheet when inspected from the outer face is favorably obtained.

[Brief Description of Drawings]

Fig. 1 shows a cross-sectional diagram schematically illustrating the constitution of the masking sheet according to an embodiment.

Fig. 2 shows a cross-sectional diagram schematically illustrating the constitution of the masking sheet according to another embodiment.

Fig. 3 schematically illustrates the masking sheet in planar view according to an embodiment where highly-detectable areas and poorly-detectable areas are present.

Fig. 4 schematically illustrates the masking sheet in planar view according to another embodiment where highly-detectable areas and poorly-detectable areas are present.

Fig. 5 schematically illustrates the masking sheet in planar view according to yet another embodiment where highly-detectable areas and poorly-detectable areas are present.

Fig. 6 schematically illustrates an example of the masking sheet having a marker in planar view according to an embodiment.

Fig. 7 shows a perspective diagram schematically illustrating a PSA product according to an embodiment.

Fig. 8 shows a cross-sectional diagram along line VIII-VIII in Fig. 7.

[Description of Embodiments]

Preferred embodiments of the present invention are described below. Matters necessary to practice this invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments in the drawings are schematically illustrated for clear description of the present invention and do not necessarily accurately reflect the size or scale of the masking sheet, etc. of this invention that is actually provided as a product.

The masking sheet disclosed herein comprises a substrate having first and second faces, and a PSA layer provided on the first face side of the substrate.

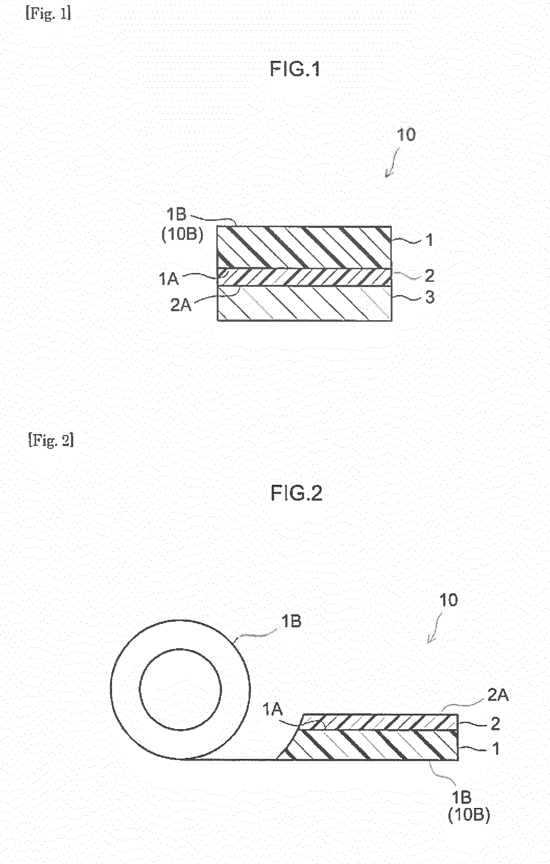

Fig. 1 schematically illustrates a typical constitution of the masking sheet according to an embodiment. The masking sheet 10 comprises a sheet-shaped substrate (e.g. a resin substrate sheet) 1 having the first face 1A and the second face 1B, and a PSA layer 2 provided on the first face 1A side. When used, masking sheet 10 is applied to certain areas (non-target areas) of the adherend (the processing object). By carrying out CS treatment while the masking sheet 10 is adhered on the non-target areas, the non-target areas are protected from the chemical solution.

Before used (i.e. before applied to the adherend), masking sheet 10 may be in a form where, typically as shown in Fig. 1, the surface 2A of the PSA layer 2 is protected with a release liner 3 having a release face at least on the side facing the PSA layer 2. Alternatively, as shown in Fig. 2, it may be in a form where the second face 1B (opposite from the first face 1A and also corresponding to the outer face 10B of the masking sheet 10) of substrate 1 is a release face and the masking sheet 10 is wound in a roll with the second face 1B in contact with the PSA layer 2 to protect the surface (adhesive face) 2A.

The masking sheet disclosed herein is constituted so that solution penetration into the masking sheet can be visually detected from its outer face.

Here, the outer face of the masking sheet refers to the surface opposite from the adhesive face. Usually, the second face of the substrate is the outer face of the masking sheet.

As used herein, solution penetration into a masking sheet refers to penetration of a chemical solution, with the penetration being internal towards the center relative to the outer perimeter of the masking sheet, and internal towards the adhesive face side relative to the outer face of the masking sheet, when the masking sheet adhered on the adherend is inspected from the outer face side. Thus, in the present description, the concept of solution penetration into the masking sheet encompasses penetration of a chemical solution via the interface between the adhesive face of the masking sheet and the adherend surface into an area to which the masking sheet is adhered (into a masked area) as well as penetration of a chemical solution into the masking sheet itself.

As used herein, that solution penetration into a masking sheet is "visually detectable" means that the solution penetration can be detected by a human eye. In typical, solution penetration into a masking sheet can be visually detected by identifying an external difference by eye between an area with solution penetration and an area without solution penetration. The external difference can be various changes that are associated with solution penetration and can be visually recognized. For instance, it can be one, two or more changes among a color change (discoloration), a change in optical transmittance, a change in uniformity (e.g. uneven appearance and blemishing), a change in refractive index, and a change in fluorescence intensity. The color change may accompany a change in one, two or more among chromaticity, saturation and brightness.

The masking sheet disclosed herein may allow visual detection of solution penetration into the masking sheet while it is adhered on the adherend (i.e. without its removal from the adherend). From the standpoint of the ease of visual detection, the masking sheet is preferably formed so that solution penetration can be visually detected by a naked eye. Nonetheless, for actual visual detection, the use of a device such as a magnifier or a scope for remote observation is acceptable for purposes such as facilitating judging whether or not the solution penetration is at or below a certain reference level, increasing the accuracy of the judgement, and reducing the load of a worker.

The masking sheet disclosed herein is not particularly limited in form as long as solution penetration into the masking sheet can be visually detected when inspected from the outer face side, and can be in various forms. The masking sheet is satisfactory if, as a whole, it allows visual detection of solution penetration when inspected from the outer face side. For instance, when the outer face of the masking sheet is divided into some imaginary sections, it is satisfactory if solution penetration can be visually detected at least in some sections. It is unnecessary that solution penetration can be visually detected in each of all the individual sections. Of course, solution penetration may be detected in each section alone.

The masking sheet disclosed herein is typically formed to show optical transmittance at least partially in external view of the masking sheet. With increasing optical transmittance of the masking sheet, the possibility of visual detection (visual detectability) of solution penetration tends to increase.

The level of optical transmittance of the masking sheet can be assessed, for instance, by its haze value. Here, the "haze value" refers to the ratio of diffused light transmittance to total light transmittance when the analytical sample is irradiated with visible light. It is also called the cloudiness value. The haze value can be expressed by the equation below. Here, Th is the haze value (%), Td is the diffused light transmittance, and Tt is the total light transmittance.

$$\mathrm{Th}\ (\%) = \mathrm{Td/Tt} \times 100$$

The haze value can be adjusted by the selection of the compositions, thicknesses, and surface conditions of the substrate and the PSA layer forming the masking sheet, etc. The haze value can be determined by the method described later in the working examples.

The masking sheet has at least partially an area having a haze value of 90 % or lower. From the standpoint of obtaining greater visual detectability, the masking sheet preferably has an area with haze value at or below 70 %, more preferably an area with haze value at or below 50 % , or yet more preferably an area with haze value at or below 35 %. The minimum haze value is not particularly limited. For instance, it can be 5 % or higher (typically 10 % or higher).

In a masking sheet having highly-detectable areas and poorly-detectable areas as described later, it is preferable that at least the highly-detectable areas have a haze value in the ranges described above. Both the highly-detectable areas and the poorly-detectable areas may have haze values in the ranges described above.

In the see-through quality test described later in Examples, it is preferable that the masking sheet disclosed herein has at least partially an area having a minimum legible font size of 10 points or lower. The lower the number of points indicating the minimum legible font size is, the higher the see-through quality is. The masking sheet with high see-through quality tends to provide greater visual detectability of solution penetration. From the standpoint of obtaining greater visual detectability of solution penetration, the masking sheet disclosed herein more preferably has an area having a minimum legible font size of 8 points or lower, or yet more preferably an area having a minimum legible font size of 6 points or lower. The lower limit of the minimum legible font size is not particularly limited. For instance, it can be 4 points or lower (typically 2 points to 4 points). In the see-through quality test described later, a minimum legible font size of 2 points indicates the maximum level of see-through quality by this test method.

As described later, in the masking sheet having highly-detectable areas and poorly-detectable areas, it is preferable that at least the highly-detectable areas have a minimum legible font size in these ranges. The minimum legible font sizes of both the highly-detectable areas and the poorly-detectable areas may be in these ranges.

The masking sheet is not particularly limited in color. It can be colored or colorless. Here, the meaning of "being colored" includes black and metallic colors. The term "colorless" means to include white. For instance, a colorless masking sheet is preferable.

The masking sheet is preferably formed so that the masking sheet itself is suitably visible. With increasing visibility of the masking sheet, it tends to be easier to recognize the location and the shape of the masking sheet by eye. This is advantageous in view of visibly detecting defects such as displacement, wrinkling, and falling of the masking sheet as well as faults such as an area inappropriately left without the masking sheet. However, with increasing visibility of the masking sheet, the detectability of solution penetration into the masking sheet tends to decrease.

The masking sheet disclosed herein can be formed so that, when the masking sheet is inspected from its outer face, it has areas where solution penetration is relatively highly visually detectable (i.e. highly-detectable areas) and areas where it is relatively poorly visually detectable (i.e. poorly-detectable areas). According to such an embodiment, with the presence of the poorly-detectable areas, the visibility of the masking sheet can be increased. According to the masking sheet in this embodiment, visual detectability of solution penetration and visibility of the masking sheet can be favorably combined.

The highly-detectable areas and the poorly-detectable areas can be formed so that the visual detectability of solution penetration changes in a non-continuous manner between these areas. Alternatively, it can be formed so that the visual detectability of solution penetration continuously (gradually) changes between the highly-detectable areas and the poorly-detectable areas.

The shapes and arrangement of the highly-detectable areas and the poorly-detectable areas are not particularly limited. In a preferable embodiment, the highly-detectable areas and the poorly-detectable areas can be placed so that they are mixed when inspected from the outer face side of the masking sheet. For instance, it is preferable that the highly-detectable areas and the poorly-detectable areas are almost evenly mixed (dispersed) over the entire masking sheet. For instance, it can be in an embodiment where the poorly-detectable areas are approximately evenly placed among the highly-detectable areas, for instance, in lines (stripes, wavy stripes, etc.), dots (circular, polygonal, irregularly-shaped, etc.), and so on. The masking sheet in such an embodiment is easy to use because it works equally well when cut to an arbitrary shape.

The poorly-detectable areas may have a relatively higher haze value as compared to the highly-detectable areas. The haze value of the poorly-detectable areas should just be higher than that of the highly-detectable areas and is not particularly limited. The haze value of the poorly-detectable areas can be, for instance, 95 % or higher, or it can be essentially 100 %. While no particular limitations are imposed, the difference in haze value between the highly-detectable areas and the poorly-detectable areas can be typically 15 % or greater, for instance, 30 % or greater. From the standpoint of obtaining greater effects of having the highly-detectable areas and the poorly-detectable areas, the difference in haze value is preferably 50 % or greater, or more preferably 70 % or greater.

The poorly-detectable areas may have relatively poor see-through quality (transparency) as compared to the highly-detectable areas. The see-through quality of the poorly-detectable areas is not particularly limited as long as it is lower than that of the highly-detectable areas. For instance, when the minimum legible font size of the highly-detectable areas is 10 points, the minimum legible font size of the poorly-detectable areas can be 11 points or higher, or even 13 points or higher. The poorly-detectable areas may have essentially no see-through quality (e.g. 16-point numbers are illegible in the see-through quality test). While no particular limitations are imposed, the difference in minimum legible font size between the highly-detectable areas and the poorly-detectable areas can be, for instance, 1 point or greater, or preferably 2 points or greater. This can favorably bring about the effects of having the highly-detectable areas and the poorly-detectable areas.

The masking sheet having highly-detectable areas and poorly-detectable areas can be obtained, for instance, by using a substrate having a detectability-adjusting layer corresponding to the shapes and arrangement of the poorly-detectable areas. While no particular limitations are imposed, the detectability-adjusting layer can be, for instance, a colored layer formed by printing an ink comprising a suitable colorant (pigment or dye) on the substrate. The detectability-adjusting layer can be a metal deposition layer formed by vapor deposition of a metal on the substrate. From the standpoint of avoiding influence of a chemical solution on the detectability-adjusting layer, the detectability-adjusting layer is advantageously formed on the first face of the substrate. In another example of the method for forming poorly-detectable areas, some areas in the first or second face of the substrate are roughened to decrease the optical transmittance in these areas. The roughening can be done by suitably employing a chemical means such as CS treatment or a physical means such as abrasion.

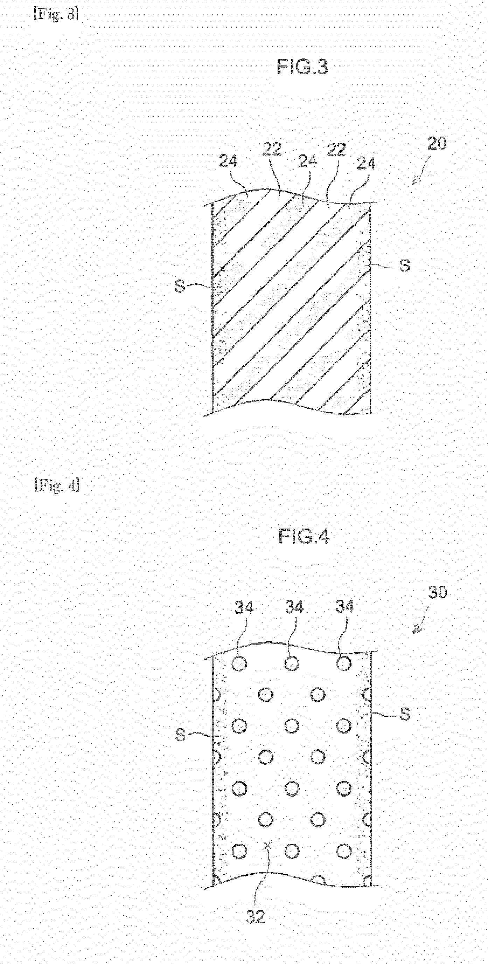

In Figs. 3 to 5, a few embodiments are illustrated as examples with respect to the masking sheet having highly-detectable areas and poorly-detectable areas. The masking sheet in each of these drawings has a constitution as shown in Fig. 1 where the PSA layer is placed on the first face side of the substrate.

Fig. 3 shows a planar view of a long masking sheet 20 seen from the outer face side. In the masking sheet 20, linear highly-detectable areas 22 and linear poorly-detectable areas 24 are placed in parallel to one another to form a striped pattern. With the masking sheet 20 in such an embodiment, because of the presence of highly-detectable areas 22, regions S with solution penetration can be easily visually detected over the entire outer face. In addition, because of the presence of poorly-detectable areas 24, the masking sheet 20 can be provided with adequate visibility.

The relation of the width of highly-detectable areas 22 and the width of poorly-detectable areas 24 is not particularly limited. For instance, their widths can be selected in view of the balance between visual detectability of solution penetration and visibility of the masking sheet 20, etc. Fig. 3 shows an example where the linear stripe pattern crosses the length direction of the masking sheet at 45° angle. But, it is not limited to this. For instance, it can be formed so that the stripe pattern is in parallel with or vertical to the length direction. The respective areas can be formed wavy as well. Examples of the wavy pattern include patterns formed of curves such as sine waves, pseudo-sine waves and arc waves, and patterns formed of non-curved lines such as zig zags and triangular waves.

Fig. 4 shows a planar view of a long masking sheet 30 seen from the outer face side. In the masking sheet 30, throughout highly-detectable areas 32, poorly-detectable areas 34 are arranged to form evenly dispersed dots. The masking sheet 30 in such an embodiment may also allow easy visual detection of regions S with solution penetration while being adequately visible.

The size and the density of arrangement of poorly-detectable areas 34 are not particularly limited. For instance, they can be selected in view of the balance between visual detectability of solution penetration and visibility of the masking sheet 30, etc. The shapes of the poorly-detectable areas 34 are not particularly limited. For instance, they can be in a pattern of, for instance, circles, triangles, polygons such as squares, or arbitrary figures such as star shapes. The density of arrangement of poorly-detectable areas 34 can be uniform entirely over the masking sheet 30; or it can be non-uniform, for instance, with the peripheries and central areas having different densities of arrangement.

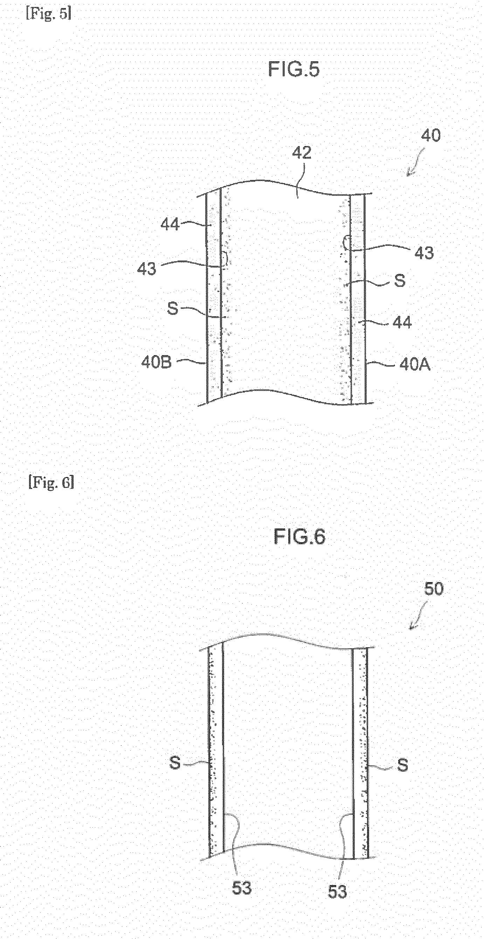

Fig. 5 shows a planar view of a long masking sheet 40 seen from the outer face side. In the masking sheet 40, long narrow poorly-detectable areas 44 are arranged along one edge 40A and the other edge 40B of the width direction (lengthwise edges 40A and 40B) and the central portion of the width direction serves as highly-detectable areas 42. In the masking sheet 40 in such an embodiment, the outer edges of the width direction are highly visible because of the poorly-detectable areas 44 running continuously along the two edges 40A and 40B of the width direction. Thus, the location of the masking sheet 40 can be precisely found. In addition, for instance, by selecting the width of the poorly-detectable areas 44 in accordance with the allowable limits (reference lines) of solution penetration, interfacial lines 43 between highly-detectable areas 42 and poorly-detectable areas 44 can be used as markers for pass/fail grading in a masking ability test. For instance, as shown in Fig. 5, when regions S with solution penetration extend beyond the interfacial lines (markers) 43 into the highly-detectable areas 42, the masking ability can be judged a fail grade. With the presence of the markers, pass/fail grades can be judged easily and accurately in the masking ability test.

The advantageous effects of the inclusion of pass/fail grading markers in a masking ability test obtained are not limited to the masking sheet having highly-detectable areas and poorly-detectable areas. For instance, as shown in Fig. 6, in a masking sheet 50 that is made entirely highly detectable, lines (lines in parallel with the two edges of the width direction in the example shown in Fig. 6) can be drawn at locations corresponding to the allowable limits (reference level) of solution penetration, and these lines can be used as pass/fail grading markers 53. For instance, as shown in Fig. 6, when regions S with solution penetration remain on the peripheral sides relative to the markers 53, the masking ability can be judged a pass grade.

The masking sheet disclosed herein can be formed so that its color changes where solution penetration occurred upon the solution penetration. According to such an embodiment, by detecting a color change in the masking sheet, solution penetration can be easily recognized by eye. The location for the color change is not particularly limited. It can be anywhere as long as the color change can be visually detected when inspected from the outer face side of the masking sheet. For instance, the color change may occur in the substrate, in the PSA layer, or in both the substrate and the PSA layer. The masking sheet may comprise a component that accelerates the color change. This can increase the visual detectability of solution penetration. For instance, when the masking sheet is used for CS treatment using an acidic solution, an indicator that turns colored or undergoes a color change under an acidic condition can be included in the PSA layer. The indicator can be placed entirely and evenly, or can be placed locally. For instance, it can be in an embodiment where the indicator is placed only at the peripheries of the masking sheet, in an embodiment where it is placed in areas corresponding to certain markers.

<Applications of masking sheets

The masking sheet disclosed herein can be widely used in various kinds of CS treatment carried out in an embodiment where a chemical solution can penetrate into the masking sheet, for instance, in an etching process, in a plating process, etc. The type of chemical solution used is not particularly limited. For instance, it can be an acidic solution, a basic solution, an oxidizing solution, a reducing solution, etc.

The processing object (adherend) to be subjected to CS treatment is not particularly limited, in material, shape, etc. The masking sheet disclosed herein can be used in CS treatment of various types of members such as a metal member, a glass member, a ceramic member, and a resin member. For instance, it can be preferably used as a masking sheet for CS treatment of a metal member. Especially, it is favorable as a masking sheet used in CS treatment of a light metal member (e.g. an aluminum member). In particular, it can be preferably used as a masking sheet for anodizing (anodic oxidation) of a light metal member. Here, the light metal member refers to a metal member having a surface formed of solely a light metal species such as aluminum, magnesium and titanium or an alloy (light alloy) whose primary component is the light metal species. An aluminum member refers to a metal member having a surface formed of aluminum or an aluminum alloy (an alloy whose primary component is aluminum). Examples of the aluminum alloy include the 2000 series alloys, 3000 series alloys, 4000 series alloys, 5000 series alloys, 6000 series alloys, and 7000 series alloys. Preferable objects to which the masking sheet disclosed herein is applied include an aluminum member having a surface formed of aluminum (typically a 1000-series aluminum) or a 2000-series alloy (e.g. duralumin A2024, duralumin A2017, etc.).

There are no particular limitations to the embodiment of the anodizing process carried out using the masking sheet disclosed herein. It can be general chromic acid anodizing, phosphoric acid anodizing, boric acid anodizing, sulfuric acid anodizing, sulfuric acid/boric acid anodizing, etc. The material or the shape of the article to be anodized (processing object) is not particularly limited. The processing object is typically a light metal member.

Favorable examples of the article (processing object) to be treated with chemical solution include metal members used as exterior members and other building members of transportation equipment. Specific examples of the transportation equipment include motor vehicles (including passenger cars, trucks, buses, motor tricycles, tractors, snow mobiles, bulldozers, and amphibious vehicles), railroad vehicles (including trains such as bullet trains, diesel vehicles, maglev trains, cable cars, monorail vehicles, and trolley buses), aircrafts (including airplanes, helicopters, and air cushion crafts), and vessels (including large ships, small ships, and water scooters). Favorable examples include aluminum members (typically duralumin members) for exterior panels of an airplane.

The surface of the metal member subjected to anodizing may be subjected to shot peening in advance. The metal member can also be milled for purposes such as thickness adjustment. Alternatively, as necessary, at an arbitrary timing, the metal member can be subjected to a common process such as washing, degreasing, drying, etching and aging. For instance, an etching step may be included between a shot peening process and CS treatment (anodizing). The masking sheet used in the etching step can be used continuously as the masking sheet for anodizing; or the masking sheet for the etching step can be removed after the etching process and a masking sheet for anodizing can be newly applied.

While no particular limitations are imposed, the masking sheet disclosed herein can be preferably used as a masking sheet that is applied to non-target areas of the metal member when such a metal member is subjected to CS treatment such as anodizing. In particular, it is favorable as a masking sheet used for CS treatment (e.g. anodizing) of a light metal member.

The masking sheet disclosed herein can be preferably applied to an article (typically a metal member, particularly a member made of light metal such as aluminum and aluminum alloy) that is further subjected to another process (a subsequent process) after the CS treatment. The subsequent process may be a process of forming an undercoat layer (a primer layer), a coating process, and the like given to the chemical solution-treated article. When the CS treatment is an anodizing process, the subsequent process can be a process of sealing the anodic oxidation coating formed by the anodizing process. The subsequent process may be a CS treatment (e.g. a process of applying a liquid such as an aqueous or solvent-based primer and an aqueous or solvent-based paint) or a process not involving a chemical solution (e.g. a dry process such as a powder coating process).

<PSA products>

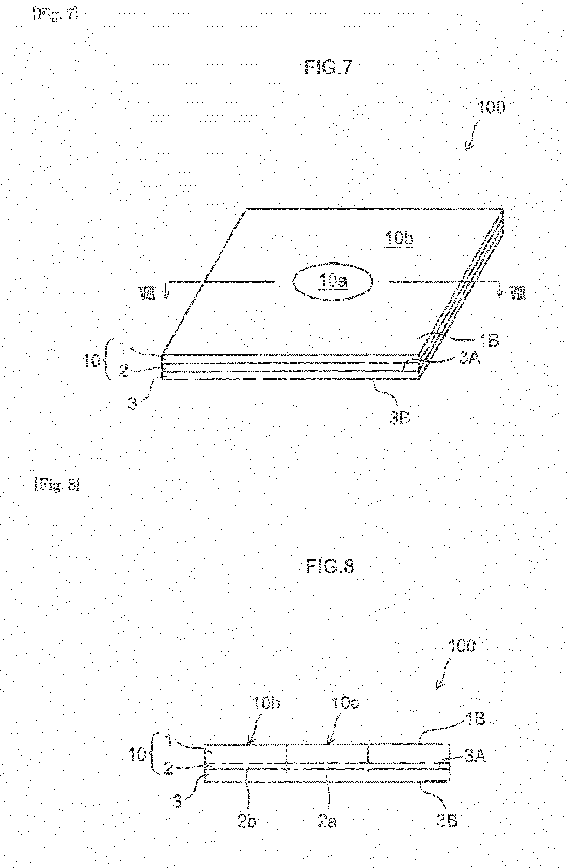

In the art disclosed herein, the masking sheet before applied to a processing object can be thought as a PSA product used for masking non-target areas of the processing object. Such a PSA product can be formed as a release liner-supported masking sheet comprising a masking sheet disclosed herein and a release liner protecting the adhesive face of the masking sheet. In a preferable embodiment of the PSA product, for instance, as shown in Fig. 7, a masking sheet 10 constituting a release liner-supported masking sheet (PSA product) 100 is divided into adjacent first and second PSA pieces 10a and 10b on a release liner 3 that is continuous (in one piece). For instance, in the example shown in Fig. 7, the outer circumference of the first circular PSA piece 10a and the inner circumference of the second PSA piece 10b surrounding the first PSA piece 10a are adjacent. Such a PSA product 100 can be obtained, for instance, as shown in Fig. 8, by cutting the masking sheet 10 supported on the release liner 3 from the second face 1B side of a substrate 1 to a depth that does not reach the back face 3B (opposite from the PSA layer side surface) of the release liner 3 (i.e. to a depth at most that does not completely divide the release liner 3). Hereinafter, such a cutting mode that divides the masking sheet, but not the release liner and a cut formed in such a cutting mode may be called "halfway cut (cutting)."

The halfway cut PSA product 100 is typically used in an embodiment where the first PSA piece 10a is separated from the second PSA piece 10b and the release liner 3 with the second PSA piece 10b left on the release liner 3, and the separated first PSA piece 10a is applied to an area to be masked of the processing object. By handling the unapplied first PSA piece 10a as a halfway cut PSA product 100, it can be handled in the same way regardless of the size and the shape of the first PSA piece 10a. This is particularly meaningful when the first PSA piece 10a has a relatively complex shape and when the first PSA piece 10a is in a relatively small size. In addition, because at least part of the release liner 3 extends over the first PSA piece 10a, it is also advantageous in view of the handling properties (the easy-to-pick-up properties) for peeling the first PSA piece 10a from the release liner 3.

In the PSA product disclosed herein, that the release liner is continuous means that the release liner is continuous (not completely cut apart) at least at the boundary between the first and second PSA pieces. Thus, the PSA product disclosed herein can be made in an embodiment where the release liner is divided elsewhere, but not at the boundary; and in an embodiment where the release liner is cut through the surface opposite from the PSA layer partially at the boundary between the first and second PSA pieces. The shape of the first PSA piece is not particularly limited. It can be selected in accordance with the shape of a certain masked area. Non-limiting examples of the shape of the first PSA piece include circle, ellipse, oval, polygons (triangle, square, etc.), various letters and symbols, and shapes of logo marks as well as shapes of negative images of these. The second PSA piece separated from the first PSA piece may or may not be used as a PSA sheet (typically a masking sheet) for the same purpose with the first PSA piece or for a different purpose.

In such a halfway cut PSAproduct, with the time after the cutting (halfway cutting), between the adjacent first and second PSApieces, the PSAlayers 2a and 2b tend to adjoin each other at the opposing cut edges, for instance, as shown in Fig. 8. Because of this, depending on the composition of the PSA, the time elapsed after the halfway cutting, the storage conditions for the PSA product, etc., blocking may occur at the opposing edge faces between the PSAlayers 2a and 2b, leading to formation of sticky strings when the first PSApiece 10a is separated from the second PSA piece 10b. The formation of sticky strings may result in irreversible deformation of the edge face of the PSAlayer 2a. When an edge face of the PSAlayer is deformed, the deformed part can initiate solution penetration. Thus, in a halfway cut PSAproduct for masking purposes (e.g. a PSA product used for masking purposes during anodizing), by inhibiting the blocking of the PSA at the cut edges or by increasing the separability of the PSA, the formation of sticky strings can be prevented or inhibited to further enhance the masking performance or its reliability (consistency).

In the art disclosed herein, as a means of preventing or inhibiting the formation of sticky strings, it is preferable to employ a means of crosslinking the PSA by a reaction of a hydroxy group-containing polymer and a hydroxy-reactive crosslinking agent. In other words, it is effective to make the PSA to have a crosslinked structure with the hydroxy group-containing polymer and the hydroxy-reactive crosslinking agent. For instance, when an isocyanate-based crosslinking agent is used as the hydroxy-reactive crosslinking agent, the PSA having such a crosslinked structure can be thought as a PSA having urethane bonding. According to the PSAhaving a crosslinked structure upon the reaction of the hydroxy group-containing polymer and the hydroxy-reactive crosslinking agent as described here, the separability of the PSA can be increased for separation of the first PSA piece from the second PSA piece and the edge face deformation of the PSAlayer can be inhibited. Especially, when using a PSA product having a PSAlayer formed with a highly self-adhesive rubber-based PSA in a halfway cut form, it is effective to constitute the PSA product to comprise a rubber-based PSAlayer crosslinked by a reaction of a hydroxy group-containing polymer and a hydroxy-reactive crosslinking agent. Accordingly, matters disclosed by the present description include a PSA sheet for masking purposes, the PSA sheet comprising a substrate having first and second faces and a PSA layer placed on the first face side of the substrate, wherein the PSA layer is formed with a PSA crosslinked by a reaction of a hydroxy group-containing polymer and a hydroxy-reactive crosslinking agent. Because the formation of sticky strings is prevented or inhibited (i.e. the separability is good), the PSA sheet having such a constitution is suitably used in an embodiment where it is halfway cut and then applied to an adherend.

The release liner constituting such a halfway cut PSA product is not particularly limited. For instance, a suitable species can be selected and used among the various types of release liners described later. In an embodiment, it is preferable to use a release liner having a release layer on a face of a liner substrate made of paper (typically made of paper laminated with polyethylene resin on one or each face) and a release liner having a release layer on a face of a resin film. A favorable example of such a release liner is a release liner comprising a liner substrate that is formed of paper laminated with polyethylene resin (i.e. polyethylene-laminated paper) and has a release layer on the laminated face thereof. The release layer is not particularly limited. For instance, a preferable release layer is formed using a silicone-based release agent. Another preferable release layer is formed using a non-silicone-based release agent, for instance, a long-chain alkyl release agent or an olefinic release agent. By this, an excessive increase in lightness of peeling (release) may be inhibited and the handling properties may be increased during the halfway cutting process or the separation of a halfway cut PSA piece.

In this description, that the PSAis highly separable means the following: when two PSA layers (here, the edge face of the PSAlayer of the first PSApiece and the edge face of the PSAlayer of the second PSApiece) that are adjacent and adjoined to each other (self-adhered) are separated, formation of sticky strings from the PSA forming the PSA layers (local stretching of the PSA into strings) is prevented or inhibited, or the PSA is torn and separated at an early stage of the formation of sticky strings (i.e. before the PSA layers are greatly deformed). Hereinafter, the PSA's separability may be referred to as the easy-to-detach properties.

<Substrate>

The substrate of the masking sheet disclosed herein is not particularly limited as long as the visual detectability can be obtained. From the standpoint of obtaining good visual detectability, a non-metal substrate is used as the substrate. Here, the non-metal substrate refers to a substrate whose primary component is a non-metallic material, typically, a substrate in which the non-metallic material accounts for about 50 % or more by weight or by volume. The non-metal refers to a non-metallic material in general and is an organic material. The non-metal substrate may have a monolayer structure consisting of one layer or a multilayer structure formed entirely or partially of two or more layers. The respective layers forming the multilayer structure may be different from one another in composition or construction, or may be the same in composition and construction. The non-metal substrate may comprise a layer formed of a species selected among organic materials and inorganic non-metallic materials, and a layer formed of a blend or a composite (composite material) of two or more different materials. As long as the masking sheet can be made with visual detectability, the non-metal substrate may comprise a layer formed of a metallic material or a layer formed of a blend or a composite of a metallic material and an organic material or an inorganic non-metallic material.

Non-limiting examples of the organic material include a synthetic organic material, a natural organic material, a semi-synthetic organic material and a recycled organic material. The organic materials may be used solely as one species or as a mixture of two or more species, for instance, in a film form, in a matrix form dispersing other material, in a form impregnated in other material, in a fiber form, in a powder form, etc. Non-limiting examples of the inorganic non-metallic material include various kinds of glass and ceramic. From the standpoint of the flexibility of the masking sheet, etc., the inorganic non-metallic material can be used as a blend or a composite that further comprises an organic material, typically in a fiber form or in a powder form. Alternatively, a thin layer of the inorganic non-metallic material may be formed entirely or partially on the surface of another layer by means of, for instance, vapor deposition, etc. The metallic material can be preferably used as a blend or a composite that further comprises an organic material, typically in a fiber form or in a powder form. Alternatively, a thin layer of the metallic material may be formed entirely or partially on the surface of another layer by means, for instance, vapor deposition and plating.

As the substrate of the masking sheet disclosed herein, various kinds of substrate in a film form (substrate film) are used. It is preferable to use a substrate film comprises a resin film capable of maintaining its shape by itself (i.e. a self-supported or independent film) as the base film. Here, the "resin film" refers to a resin film that has a non-porous structure and is typically essentially free of bubbles (essentially void-free). Thus, the concept of resin film should be distinguished from foamed films and non-woven fabrics. The resin film may have a monolayer structure or a multilayer structure (e.g. a three-layer structure) formed of two or more layers.

As the resin material forming the resin film, the present invention uses polyester resin, polyolefinic resins, polyamide resin (PA), polyimide resin (PI), polyamide-imide resin (PAI), polyether ether ketone resin (PEEK), polyethersulfone (PES), polyphenylene sulfide resin (PPS), polycarbonate resin (PC), polyurethane resin (PU), ethylene-vinyl acetate resin (EVA), fluororesins such as polytetrafluoroethylene (PTFE), and acrylic resin. The resin film may be formed, using a resinous material that comprises solely one species among these resins or a resinous material in which two or more species are blended. The resin film can be a non-stretched kind or a stretched kind (e.g. uniaxially stretched or biaxially stretched).

Examples of preferable resinous materials include a polyester-based resin, PPS resin and a polyolefinic resin. Here, the polyester-based resin refers to a resin comprising more than 50 % polyester by weight. Similarly, the PPS resin refers to a resin comprising more than 50 % PPS by weight. The polyolefinic resin refers to a resin comprising more than 50 % polyolefin by weight.

As the polyester-based resin, typically a polyester-based resin comprising, as the primary component, a polyester obtainable by polycondensation of a dicarboxylic acid and a diol is used.

Examples of the dicarboxylic acid forming the polyester include aromatic dicarboxylic acids such as phthalic acid, isophthalic acid, terephthalic acid, 2-methylterephthalic acid, 5-sulfoisophthalic acid, 4,4'-diphenyldicarboxylic acid, 4,4'-diphenyl ether dicarboxylic acid, 4,4'-diphenyl ketone dicarboxylic acid, 4,4'-diphenoxyethane dicarboxylic acid, 4,4'-diphenylsulfone dicarboxylic acid, 1,4-naphthalene dicarboxylic acid, 1,5-naphthalene dicarboxylic acid, 2,6-naphthalene dicarboxylic acid and 2,7-naphthalene dicarboxylic acid; alicyclic dicarboxylic acids such as 1,2-cyclohexane dicarboxylic acid, 1,3-cyclohexane dicarboxylic acid, and 1,4-cyclohexane dicarboxylic acid; aliphatic dicarboxylic acids such as malonic acid, succinic acid, glutaric acid, adipic acid, pimelic acid, suberic acid, azelaic acid, sebacic acid, and dodecanoic acid; unsaturated dicarboxylic acids such as maleic acid, anhydrous maleic acid, and fumaric acid; and derivatives of these (e.g. lower alcohol esters of the dicarboxylic acids such as terephthalic acid, etc.). These can be used singly as one species or in a combination of two or more species. An aromatic dicarboxylic acid is preferable because the substrate can be readily obtained with a preferable elastic modulus Es' value described later. Particularly preferable dicarboxylic acids include terephthalic acid and 2,6-naphthalene dicarboxylic acid. For instance, it is preferable that terephthalic acid, 2,6-naphthalene dicarboxylic acid, or a combination of these accounts for 50 % by weight or more (e.g. 80 % by weight or more, typically 95 % by weight or more) of the dicarboxylic acid forming the polyester. The dicarboxylic acid may consist essentially of terephthalic acid, essentially of 2,6-naphthalene dicarboxylic acid, or essentially of terephthalic acid and 2,6-napthalene dicarboxylic acid.

Examples of the diol forming the polyester include aliphatic diols such as ethylene glycol, diethylene glycol, polyethylene glycol, propylene glycol, polypropylene glycol, 1,3-propanediol, 1,5-pentanediol, neopentyl glycol, 1,4-butanediol, 1,6-hexanediol, 1,8-octanediol, and polyoxytetramethylene glycol; alicyclic diols such as 1,2-cyclohexanediol, 1,4-cyclohexanediol, 1,1-cyclohexanedimethylol, and 1,4-cyclohexanedimethylol; and aromatic diols such as xylylene glycol, 4,4'-dihydroxybiphenyl, 2,2-bis(4'-hydroxyphenyl)propane, and bis(4-hydroxyphenyl)sulfone. These can be used singly as one species or in a combination of two or more species. In particular, from the standpoint of the transparency, etc., aliphatic diols are preferable; from the standpoint of the substrate's elastic modulus Es', ethylene glycol is particularly preferable. The ratio of the aliphatic diol (preferably ethylene glycol) in the diol forming the polyester is preferably 50 % by weight or higher (e.g. 80 % by weight or higher, typically 95 % by weight or higher). The diol may essentially consist of ethylene glycol.

Specific examples of the polyester-based resin include polyethylene terephthalate (PET), polybutylene terephthalate (PBT), polyethylene naphthalate (PEN), and polybutylene naphthalate.

As the polyolefinic resin, solely one species of polyolefin or a combination of two or more species of polyolefin can be used. Examples of the polyolefin include an α-olefin homopolymer, a copolymer of two or more species of a-olefin, and a copolymer of one, two or more species of α-olefin and another vinyl monomer. Specific examples include polyethylene (PE), polypropylene (PP), ethylene-propylene copolymers such as ethylene-propylene rubber (EPR), ethylene-propylene-butene copolymers, ethylene-butene copolymers, and ethylene-ethyl acrylate copolymers. Either a low-density (LD) polyolefin or a high-density (HD) polyolefin can be used. Examples of the polyolefin resin include non-stretched polypropylene (CPP) film, biaxially-stretched polypropylene (OPP) film, low-density polyethylene (LDPE) film, linear low-density polyethylene (LLDPE) film, medium-density polyethylene (MDPE) film, high-density polyethylene (HDPE) film, polyethylene (PE) film in which two or more species of polyethylene (PE) is blended, PP/PE blend film in which polypropylene (PP) and polyethylene (PE) are blended.

From the standpoint of the anchoring of the PSAlayer, etc., a polyester-based resin can be preferably used. From the standpoint of the transparency, strength, etc., PET is particularly preferable.

As long as the effects of this invention are not significantly impaired, the resin film may comprise, as necessary, known additives such as photostabilizer, antioxidant, anti-static agent, colorant (dye, pigment, etc.), filler, slip agent, and anti-blocking agent. The amount of an additive added is not particularly limited and can be suitably selected in accordance with the purpose of the masking sheet, etc.

The method for producing the resin film is not particularly limited. A heretofore known general resin film molding method can be suitably employed, for instance, extrusion molding, inflation molding, T-die casting, and calender roll molding.

The substrate may be formed essentially of such a base film. Alternatively, the substrate may comprise a supplemental layer besides the base film. Examples of the supplemental layer include a visual detectability-adjusting layer (e.g. a colored layer) and an antistatic layer provided to the first or second face of the base film.

The thickness of the substrate is not particularly limited. It can be, for instance, 500 μm or less; it is preferably 300 μm or less, more preferably 200 μm or less, or yet more preferably 150 μm or less, typically 120 μm or less. A smaller thickness of the substrate tends to result in enhanced visual detectability of solution penetration, a lower haze value of the masking sheet, and increased see-through quality. It also tends to increase the conformability to the surface structure of the adherend. In a preferable embodiment, the substrate's thickness can be 90 μm or less, or even 80 μm or less.

From the standpoint of the peeling efficiency and other handling properties, the substrate's thickness is suitably 15 μm or greater, preferably 25 μm or greater, or more preferably 40 μm or greater. A larger thickness of the substrate tends to make it easier to prevent solution penetration with swelling from the outer face side of the masking sheet. From such a standpoint, the substrate's thickness can be 50 μm or greater, or it is more preferably 60 μm or greater.

The first face of the substrate may be subjected to heretofore known surface treatment as necessary, such as corona discharge treatment, plasma treatment, UVray irradiation, acid treatment, alkali treatment, undercoating (primer coating), and antistatic treatment. Such surface treatment may be carried out to increase the tightness of adhesion between the substrate and the PSAlayer, that is, the anchoring of the PSA layer to the substrate. The primer composition is not particularly limited. A suitable species can be selected among known species. The thickness of the primer layer is not particularly limited. It is usually preferably about 0.01 μm to 1 μm, or preferably about 0.1 μm to 1 μm.

The second face of the substrate may be subjected to heretofore known surface treatment as necessary, such as release treatment and antistatic treatment. For instance, the back face of the substrate can be provided with a long-chain alkyl-based, olefinic, or silicone-based release layer, etc., to reduce the unwinding force of the protection sheet wound in a roll. In addition, for purposes such as increasing the printability, reducing the light reflection and increasing the ease of application in layers (overlapping application property), the second face of the substrate may be subjected to treatment such as corona discharge treatment, plasma treatment, UV-ray irradiation, acid treatment and alkali treatment.

<PSA layer>

The PSA layer in the art disclosed herein is typically a layer formed from a material (PSA) that exists as a soft solid (a viscoelastic material) in a room temperature range and has a property to adhere easily to adherend with some pressure applied. As defined in "Adhesion : Fundamental and Practice" by C. A. Dahlquist (McLaren & Sons (1966), P. 143), the PSA referred to herein is generally a material that has a property satisfying complex tensile modulus E* (1Hz) < $10^7$ dyne/cm$^2$ (typically, a material that exhibits the described characteristics at 25 °C).

The PSA layer in the art disclosed herein may be formed from PSA compositions in various forms, such as a water-dispersed PSA composition, water-soluble PSA composition, solvent-based PSA composition, hot-melt PSA composition and active energy ray-curable PSA composition. From the standpoint of the resistance to solution penetration, etc., a solvent-based PSA composition can be preferably used.

The PSA comprises, preferably as the base polymer (the primary component, i.e. a component accounting for more than 50 % by weight, among the polymers), one, two or more species among various rubbery polymers such as rubber-based polymers, acrylic polymers, polyester-based polymers, urethane-based polymers, polyether-based polymers, silicone-based polymers, polyamide-based polymers, and fluoropolymers that are known in the PSA field. Examples of the PSA preferable from the standpoint of the resistance to chemical solutions, etc., include a rubber-based PSA, an acrylic PSA and a silicone-based PSA. Here, the rubber-based PSA refers to a PSA that comprises one, two or more species of rubber-based polymer as the base polymer. The same applies to the acrylic PSA and the silicone-based PSA. The acrylic polymer refers to a polymer that includes a monomeric unit derived from an acrylic monomer in the polymer structure, typically a polymer that comprises a monomeric unit derived from an acrylic monomer at a ratio above 50 % by weight. Here, the acrylic monomer refers to a monomer having at least one (meth)acryloyl group per molecule. The (meth)acryloyl group comprehensively refers to acryloyl group and methacryloyl group.

As the PSA layer of the masking sheet disclosed herein, a rubber-based PSA layer of which the primary component is a rubber-based PSA is used. The rubber-based PSA comprises one, two or more species of rubber-based polymer selected from natural rubbers and optionally synthetic rubbers. As used herein, the primary component refers to a component accounting for more than 50 % by weight unless otherwise noted.

The natural rubber is not particularly limited. For example, standard Malaysian rubber (SMR), standard Vietnamese rubber (SVR), ribbed smoked sheets (RSS), pale crepe, and the like can be used.

The Mooney viscosity of the natural rubber in the rubber-based PSA is not particularly limited. For instance, under the measurement conditions for MS(1+4) at 100 °C, the natural rubber may have a Mooney viscosity (Mooney viscosity $MS_{1+4}(100°C)$) of about 10 or higher (typically 30 or higher, preferably 50 or higher, or more preferably 65 or higher). The Mooney viscosity $MS_{1+4}(100°C)$ of the natural rubber is typically 150 or lower; it may be usually 120 or lower (e.g. 100 or lower). In an embodiment, a natural rubber having a Mooney viscosity $MS_{1+4}(100°C)$ of about 10 to 100 (e.g. about 30 to 95) can be used. In another embodiment, a natural rubber having a Mooney viscosity $MS_{1+4}(100°C)$ of about 50 to 90 (e.g. about 65 to 85) can be used. For instance, a natural rubber having a Mooney viscosity $MS_{1+4}(100°C)$ of higher than 70 (typically higher than 70 and 90 or lower, e.g. about 72 to 85) can be preferably used. The Mooney viscosity can be adjusted by a general method such as mastication.

In a preferable embodiment of the natural rubber-containing rubber-based PSA, the natural rubber can be used without mastication or with minor mastication. A rubber-based PSA comprising such a natural rubber tends to exhibit adequate chemical resistance because the natural rubber has a relatively high molecular weight (i.e. it has a long molecular chain). While no particular limitations are imposed, in an embodiment, it is preferable to use a natural rubber having a Mooney viscosity $MS_{1+4}(100°C)$ of higher than 70 (typically higher than 70, but 100 or lower), more preferably 75 or higher (typically 75 to 100), for instance, 80 or higher (typically 80 to 100, or 85 or higher, e.g. 85 to 120 or even 85 to 100). A natural rubber having such a relatively high Mooney viscosity $MS_{1+4}(100°C)$ can be particularly preferably used, for instance, in a non-crosslinked PSA layer described later or in a rubber-based PSA layer (possibly a non-crosslinked PSA layer) in which the rubber-based polymer has a composition essentially formed of a natural rubber.

Specific examples of the synthetic rubber include polyisoprene, polybutadiene, polyisobutylene, butyl rubber, styrene-butadiene rubber (SBR), and a styrene-based block copolymer. Other examples of the synthetic rubber include ethylene-propylene rubber, propylene-butene rubber, and ethylene-propylene-butene rubber. Yet other examples of the synthetic rubber include a grafted natural rubber obtainable by grafting other monomer to a natural rubber. The other monomer can be one, two or more species of monomers that can be grafted to natural rubbers. These synthetic rubbers can be used singly as one species or in a combination of two or more species.

Specific examples of the styrene-based block copolymer include a styrene-isoprene block copolymer, a styrene-butadiene block copolymer, and hydrogenation products of these. Here, the styrene-isoprene block copolymer refers to a copolymer having at least one styrene block and one isoprene block. The same applies to the styrene-butadiene copolymer. The styrene block refers to a segment in which styrene is the primary monomer (a comonomer exceeding 50 % by weight; the same applies hereinafter). A segment essentially formed of styrene is a typical example of the styrene block referred to here. The same applies to the isoprene block and the butadiene block.

While no particular limitations are imposed, as the styrene-based block copolymer, it is possible to use a species having a styrene content of 5 % to 50 % by weight, preferably 10 % to 45 % by weight, or more preferably 12 % to 35 % by weight (e.g. 15 % to 30 % by weight). The styrene content refers to the weight ratio of styrene in the total weight of the block copolymer and can be determined by NMR (nuclear magnetic resonance spectroscopy).

The styrene-based block copolymer may comprise, as the primary component, a polymer having a linear structure such as a diblock copolymer and a triblock copolymer, or a polymer having a radial structure.

An example of preferable rubber-based PSA is a PSA that comprises a natural rubber and a synthetic rubber as the rubber-based polymer. As the synthetic rubber used in combination with the natural rubber, for instance, one, two or more species can be used among the aforementioned various synthetic rubbers. A synthetic rubber having a composition in which styrene is copolymerized can be preferably used, such as a styrene-based block copolymer and SBR. From the standpoint of the residue-free removability, etc., a combination of a natural rubber and a styrene-isoprene block copolymer is particularly preferable. As the styrene-isoprene block copolymer, it is possible to use a species having a styrene content of 5 % to 50 % by weight, preferably 10 % to 45 % by weight, or more preferably 12 % to 35 % by weight (e.g. 15 % to 30 % by weight). A preferable styrene-isoprene block copolymer comprises a polymer having a radial structure as the primary component. Examples of commercial styrene-isoprene block copolymers that can be preferably used include trade name QUINTAC 3460C (available from Zeon Corporation).

In the PSA comprising a natural rubber and a synthetic rubber, the ratio of their amounts contained is not particularly limited. For instance, the composition may include 10 parts to 110 parts by weight (preferably 15 parts to 80 parts by weight, more preferably 20 parts to 40 parts by weight) of the synthetic rubber to 100 parts by weight of the natural rubber.

The weight ratio of the natural rubber and the synthetic rubber combined in the entire PSAlayer can be, but is not particularly limited to, typically 30 % to 90 % by weight, preferably 40 % to 80 % by weight, or more preferably 40 % to 70 % by weight, for instance, 45 % to 60 % by weight. In a preferable embodiment, the weight ratio of the natural rubber and the synthetic rubber combined in the entire PSAlayer can be 10 % to 70 % by weight (more preferably 20 % to 60 % by weight, e.g. 30 % to 60 % by weight).

Another example of preferable rubber-based PSA is a PSA comprising a rubber-based polymer that is essentially formed of a natural rubber, that is, a PSAin which the natural rubber accounts for 95 % by weight or more (typically 98 % by weight or more, e.g. 99 % by weight or more) of the rubber-based polymer. Yet another example of preferable rubber-based PSA is a PSAin which the rubber-based polymer essentially consists of a synthetic rubber, that is, a PSAin which the synthetic rubber accounts for 95 % by weight or more (typically 98 % by weight or more, e.g. 99 % by weight or more) of the rubber-based polymer.

The art disclosed herein can be preferably implemented in an embodiment of the masking sheet comprising a PSAlayer formed of a non-crosslinked PSA. Here, the "PSA layer formed of a non-crosslinked PSA" refers to a PSA layer formed without a deliberate process of forming chemical bonding in the base polymer (i.e. a crosslinking process, e.g. addition of a crosslinking agent, etc.). Such a PSAlayer tends to be highly flexible; and therefore, it can be conformable to contours possibly present on the adherend surface, showing tight adhesion to the adherend surface. The PSAlayer is also less susceptible to accumulation of internal distortion (even if distortion occurs momentarily, it can be easily dissipated); and therefore, even if it is exposed to, for instance, physical stress or a temperature change after applied, peeling due to internal distortion hardly occurs. Thus, it tends to readily maintain tight adhesion to the adherend surface. Such highly tight adhesion to the adherend surface may advantageously contribute to prevent penetration of chemical solutions. It is particularly meaningful to comprise a PSA layer formed of a non-crosslinked PSA when the masking sheet is applied to a milled member (which may have contours corresponding to mill marks on the surface, e.g. contours differing in height by as much as about 20 μm) or to a member that is subjected to shot peening before or after the masking sheet is applied. The art disclosed herein can be preferably implemented in an embodiment comprising, for instance, a non-crosslinked rubber-based PSA layer, wherein the rubber-based polymer in the rubber-based PSAlayer essentially consists of a natural rubber that has a Mooney viscosity $MS_{1+4}$(100°C) of higher than 70 (typically higher than 70, but 100 or lower), more preferably 75 or higher (typically 75 to 100), for instance, 80 or higher (typically 80 to 100, or 85 or higher, e.g. 85 to 120, or even 85 to 100).

The PSA layer in the art disclosed herein may comprise a tackifier in addition to the base polymer. The inclusion of the tackifier can increase the adhesive strength to an adherend (a processing object) and increase the reliability (consistency) of masking performance. As the tackifier, one, two or more species can be used among commonly-known tackifiers such as rosin-based resins, petroleum-based resins, terpene-based resins, phenolic resins and the like.

Examples of the rosin-based resin include rosin derivatives such as disproportionated rosins, hydrogenated rosins, polymerized rosins, maleinized rosins, and fumarated rosins as well as phenol-modified rosins and rosin esters. Examples of phenol-modified rosins include products of addition reactions of natural rosins or rosin derivatives with phenols as well as phenol-modified rosins resulting from reactions of resole phenolic resins with natural rosins or rosin derivatives. The phenol-modified rosin can be used as a metal salt. Examples of the rosin ester include products of esterification of the rosin-based resins with polyols. Rosin phenol resins can be esterified as well.

Examples of the terpene-based resin include terpene resins, terpene-phenol resins, aromatized terpene resins, and hydrogenated terpene resins.

Examples of the petroleum resin include aliphatic (C5-based) petroleum resins, aromatic (C9-based) petroleum resins, aliphatic/aromatic copolymer (C5/C9-based) petroleum resins, hydrogenated products of these (e.g. alicyclic petroleum resins obtainable by hydrogenating aromatic petroleum resins), and various modified products of these (e.g. products modified with anhydrous maleic acid).

Examples of the terpene-based resin include terpene resins and modified terpene resins.

Examples of the terpene resin include terpenes (typically monoterpenes) such as α-pinene, β-pinene, d-limonene, l-limonene, and dipentene. The terpene resin can be a homopolymer of one species of terpene or a copolymer of two or more species of terpene. Examples of the homopolymer of one species of terpene include $\alpha$-pinene polymer, $\beta$-pinene polymer, and dipentene polymer.

Examples of the modified terpene resin include resins resulting from modifications (phenol modification, styrene modification, hydrogenation, hydrocarbon modification, etc.) of terpene resins as those described above. Specific examples include terpene-phenol resins, styrene-modified terpene resins, and hydrogenated terpene resins. Here, the terpene-phenol resin refers to a polymer that comprises a terpene residue and a phenol residue and its concept encompasses both a copolymer of a terpene and a phenol compound (a terpene-phenol copolymer resin) and a phenol-modification product of a terpene homopolymer or a terpene copolymer (a terpene resin, typically an unmodified terpene resin).

Examples of the phenolic resin include condensation products of formaldehyde and various phenols such as phenol, m-cresol, 3,5-xylenol, p-alkylphenols and resorcinol. Other examples of the phenolic resin include resoles obtainable by base-catalyzed addition reactions of the phenols and formaldehyde as well as novolacs obtainable by acid-catalyzed condensation reactions of the phenols and formaldehyde.

Examples of commercial tackifiers that can be preferably used include, but are not limited to, trade name QUINTONE D-200 (anhydrous maleic acid-modified C5/C9-based petroleum resin, softening point about 100 °C, available from Zeon Corporation), trade name SUMILITE PR12603N (phenol-modified rosin, softening point about 130 °C, available from Sumitomo Bakelite Co., Ltd.), and trade name YS RESIN PX1150 (terpene resin, softening point about 115 °C, available from Yasuhara Chemical Co. Ltd.).

The tackifier content is not particularly limited. It can be selected so that appropriate adhesive performance can be produced in accordance with certain purpose and application. The tackifier content (when two or more species of tackifier are contained, their combined amount) to 100 parts by weight of the base polymer can be, for instance, 5 parts to 500 parts by weight.

In a preferable embodiment, the tackifier content to 100 parts by weight of the base polymer can be 20 parts to 350 parts by weight, preferably 50 parts to 300 parts by weight, or more preferably 65 parts to 250 parts by weight. In another preferable embodiment, the tackifier content to 100 parts by weight of the base polymer can be, for instance, 20 parts to 150 parts by weight; it is preferably 30 parts to 120 parts by weight, or more preferably 40 parts to 100 parts by weight. For instance, the tackifier content can be preferably applied to a rubber-based PSA (typically a PSA comprising a natural rubber and a synthetic rubber together).

In yet another preferable embodiment, the tackifier content to 100 parts by weight of the base polymer can be, for instance, 5 parts to 100 parts by weight; it is preferably 10 parts to 80 parts by weight, or more preferably 15 parts to 60 parts by weight (e.g. 20 parts to 40 parts by weight). For instance, the tackifier content can be preferably applied to a PSA (preferably a non-crosslinked PSA) whose rubber-based polymer essentially consists of a natural rubber.

While no particular limitations are imposed, the masking sheet disclosed herein can be made in an embodiment where the tackifier content in the PSA layer is, for instance, 10 % to 85 % by weight. From the standpoint point of obtaining greater effects of the use of the tackifier, the tackifier content in the PSA layer is usually preferably 15 % by weight or higher, or more preferably 20 % by weight or higher. From the standpoint of the efficiency of removal work from the adherend (processing object), etc., the tackifier content in the PSA layer is usually suitably 75 % by weight or lower, or preferably 70 % by weight or lower.

In a preferable embodiment, the tackifier content in the PSA layer can also be 40 % by weight or higher, or even 50 % by weight or higher (e.g. 60 % by weight or higher). For instance, this tackifier content can be preferably applied to a rubber-based PSA (typically a PSA comprising a natural rubber and a synthetic rubber together).

In another preferable embodiment, the tackifier content in the PSA layer can be 10 % to 70 % by weight, or more preferably 10 % to 50 % by weight (e.g. 15 % to 35 % by weight). For instance, this tackifier content can be preferably applied to a PSA (preferably a non-crosslinked PSA) whose rubber-based polymer essentially consists of a natural rubber.

In the art disclosed herein, as the tackifier, it is preferable to use a species having a softening point (softening temperature) of about 60 °C or higher (preferably about 80 °C or higher, or more preferably about 90 °C or higher). With a tackifier having a softening point at or above the lower limit, the PSA layer is likely to be formed with excellent residue-free removability. The maximum softening point is not particularly limited. For instance, it can be about 200 °C or lower (typically 180 °C or lower). The softening point of a tackifier can be determined based on the softening point test method (ring and ball method) specified in JIS K2207.

In an embodiment of the art disclosed herein, the tackifier can be preferably used in an embodiment comprising a tackifier having a softening point of 120 °C or higher. The tackifier with softening point at or above 120 °C can be used alone or in combination with a tackifier with softening point below 120 °C. In the latter case, the ratio of the tackifier with softening point at or above 120 °C in the total tackifier used is usually suitably 5 % by weight or higher, or preferably 10 % by weight or higher (e.g. 15 % by weight or higher). The maximum ratio of the tackifier with softening point at or above 120 °C can be, for instance, 95 % by weight or lower, or usually suitably 70 % by weight or lower (e.g. lower than 50 % by weight).

In an embodiment of the art disclosed herein, the tackifier can be preferably used in an embodiment comprising a tackifier having a softening point below 120 °C. The tackifier with softening point below 120 °C can be used alone or in combination of a tackifier with softening point at or above 120°C. In the latter case, the ratio of the tackifier with softening point below 120 °C in the total tackifier used can be, for instance, 30 % by weight or higher; it is usually suitably 50 % by weight or higher, or preferably 70 % by weight or higher. The ratio of the tackifier with softening point below 120 °C can be 95 % by weight or higher, or even 100 % by weight. As the tackifier with softening point below 120 °C, for instance, a terpene-based resin with softening point below 120 °C (typically at or above 80 °C, but below 120 °C) can be preferably used.

For the tackifier, solely one species or a combination of two or more species can be used. For instance, in an embodiment of the art disclosed herein, a combination of a petroleum-based resin and a rosin-based resin can be preferably used as the tackifier. While no particular limitations are imposed, for instance, in a PSA comprising a natural rubber and a synthetic rubber together, a combination of a petroleum-based resin and a rosin-based resin can be preferably used as the tackifier.

When a petroleum-based resin and a rosin-based resin are used in combination, the relation of their amounts used is not particularly limited. In a preferable embodiment, the amount of the petroleum-based resin used to 1 part by weight of the rosin-based resin can be, for instance, 0.1 part to 20 parts by weight; it is usually suitably 0.7 part to 15 parts by weight, or preferably 1.0 part to 10 parts by weight (typically greater than 1.0 part by weight, but 10 parts by weight or less). When the petroleum-based resin is used in an amount of 1.5 parts to 8 parts by weight relative to 1 part by weight of the rosin-based resin, more favorable results can be obtained. In another preferable embodiment, the amount of the rosin-based resin used to 100 parts by weight of the petroleum-based resin can be, for instance, 10 parts to 200 parts by weight; it is usually suitably 20 parts to 120 parts by weight, or preferably 30 parts to 80 parts by weight. The relation of the amounts of the petroleum-based resin and the rosin-based resin used can be preferably applied to, for instance, a rubber-based PSA (typically a PSA comprising a natural rubber and a synthetic rubber together).

In another embodiment of the art disclosed herein, a terpene-based resin can be preferably used as the tackifier. While no particular limitations are imposed, such an embodiment is favorable, for instance, in a PSA (preferably a non-crosslinked PSA) whose rubber-based polymer essentially consists of a natural rubber. The art disclosed herein can be preferably implemented in an embodiment where the terpene-based resin (typically a terpene resin) accounts for more than 50 % by weight (more preferably 70 % by weight or more, typically 85 % by weight or more, e.g. 95 % by weight or more) of the tackifier. For instance, the natural rubber may have a Mooney viscosity $MS_{1+4}$(100°C) of 80 or higher (typically 80 to 100).

The PSA layer in the art disclosed herein may be formed from a PSA composition comprising a crosslinking agent. The use of the crosslinking agent tends to enhance the residue-free removability of the masking sheet. As the crosslinking agent, a crosslinking agent known or commonly used in the PSA field can be used, such as an isocyanate-based crosslinking agent, epoxy-based crosslinking agent, silicone-based crosslinking agent, oxazoline-based crosslinking agent, aziridine-based crosslinking agent, silane-based crosslinking agent, alkyl etherified melamine-based crosslinking agent, and metal chelate-based crosslinking agent. For the crosslinking agent, solely one species or a combination of two or more species can be used. The amount of the crosslinking agent used is not particularly limited. In a preferable embodiment, the amount of the crosslinking agent used can be, for instance, 0.1 part to 10 parts by weight relative to 100 parts by weight of the base polymer; it is usually suitably 1 part to 8 parts by weight. Alternatively, essentially no crosslinking agent may be used.

A favorable example of the crosslinking agent is an isocyanate-based crosslinking agent. The isocyanate-based crosslinking agent is typically an isocyanate having at least two isocyanate groups per molecule. The isocyanate can be either an aromatic isocyanate or an aliphatic isocyanate. The isocyanate is preferably an aromatic isocyanate. Examples of commercial aromatic isocyanate-based crosslinking agents include trade name CORONATE L (available from Nippon Polyurethane Industry Co., Ltd.). For the isocyanate-based crosslinking agent, solely one species or a combination of two or more species can be used.

From the standpoint of obtaining greater crosslinking effects, the isocyanate is preferably a polyisocyanate having at least three isocyanate groups per molecule, or more preferably at least one species selected from the group consisting of aromatic polyisocyanates and aliphatic polyisocyanates. Favorable examples of the polyisocyanate include an aromatic diisocyanate-polyol adduct and an aliphatic diisocyanate-polyol adduct. For instance, a compound having terminal isocyanate groups obtainable by a reaction of a polyol and the diisocyanate in excess can be preferably used as the polyisocyanate.

Examples of the aromatic diisocyanate include tolylene diisocyanate, diphenylmethane diisocyanate, 1,5-naphthylene diisocyanate, tolidine diisocyanate, xylylene diisocyanate, and tetramethylxylylene diisocyanate. Among these, from the standpoint of the reactivity, etc., a preferable example is tolylene diisocyanate.

Examples of the aliphatic diisocyanate include 1,6-hexamethylene diisocyanate, 1,4-tetramethylene diisocyanate, 2-methyl-1,5-pentane diisocyanate, 3-methyl-1,5-pentane diisocyanate, lysine diisocyanate, isophorone diisocyanate, cyclohexyl diisocyanate, hydrogenated tolylene diisocyanate, hydrogenated xylene diisocyanate, hydrogenated diphenylmethane diisocyanate, and hydrogenated tetramethylxylene diisocyanate. Among these, from the standpoint of the reactivity, etc., a preferable example is 1,6-hexamethylene diisocyanate.

Examples of the polyol include aliphatic polyols such as ethylene glycol, glycerin, trimethylolpropante, pentaerythritol, di(trimethylolpropane), and dipentaerythritol. Among them, trimethylolpropane is preferable.

The PSA layer in the art disclosed herein may be formed from a PSA composition comprising a hydroxy group-containing polymer. It is preferable to use the hydroxy group-containing polymer in combination with a hydroxy-reactive crosslinking agent. By this, a flexible crosslinked structure is formed by the reaction of the hydroxy group-containing polymer and the hydroxy-reactive crosslinking agent, and the separability (easy-to-detach properties) of the PSA can be enhanced while degradation of other properties is inhibited. Such combined use of a hydroxy group-containing polymer and a hydroxy-reactive crosslinking agent is particularly meaningful, for instance, in a masking sheet that can be used in a form halfway cut as described later. Since rubber-based PSA generally tends to be susceptible to blocking, in the masking sheet having a rubber-based PSA layer, it is particularly meaningful to use a hydroxy group containing polymer and a hydroxy-reactive crosslinking agent together.

As the hydroxy group-containing polymer, a polymer having in average one or more (typically 1.5 or more) hydroxy groups per molecule can be preferably used. The number average molecular weight (Mn) of the hydroxy group-containing polymer is not particularly limited. It can be, for instance, about 500 to 500000. From the standpoint of the compatibility and reactivity with other components, the hydroxy group-containing polymer usually has a Mn value of suitably about 500 to 50000, preferably about 500 to 20000, or more preferably about 500 to 10000 (e.g. about 500 to 5000). Mn can be determined based on ASTM D2503.

Non-limiting examples of the hydroxy group-containing polymer include polyethyle-based polyols such as polyethylene glycol, polypropylene-based polyols such as polypropylene glycol, polybutadiene polyols, hydrogenated polybutadiene polyols, polyisoprene polyols, and hydrogenated polyisoprene polyols. From the standpoint of the compatibility with the base polymer, etc., preferable examples include hydrogenated polyisoprene polyols, polyisoprene polyols, polybutadiene polyols and hydrogenated polybutadiene polyols.

From the standpoint of the reactivity, the hydroxy group-containing polymer has a hydroxyl value (mgKOH/g) of 5 or greater (typically 10 or greater, e.g. 20 or greater). From the standpoint of the adhesive strength of the PSA layer, the hydroxyl value (mgKOH/g) of the hydroxy group-containing polymer is preferably 95 or less (typically 80 or less). In a preferable embodiment, a hydroxy group-containing polymer having a hydroxyl value (mgKOH/g) in a range of 20 to 80 can be used. The hydroxyl value can be determined based on JIS K1557:1970.

As the hydroxy group-containing polymer, a commercial product can be used. Examples of the commercial product include Poly bd R-45HT (liquid butadiene having terminal hydroxy groups, Mn 2800, hydroxyl value 46.6 mgKOH/g, available from Idemitsu Kosan Co., Ltd.), Poly ip (liquid polyisoprene having terminal hydroxy groups, Mn 2500, hydroxyl value 46.6 mgKOH/g, available from Idemitsu Kosan Co., Ltd.), EPOL (hydrogenated liquid polyisoprene having terminal hydroxy groups, Mn 2500, hydroxyl value 50.5 mgKOH/g, available from Idemitsu Kosan Co., Ltd.), GI-1000 (liquid polybutadiene having a hydroxy group, Mn 1500, hydroxyl value 60-75 mgKOH/g, available from Nippon Soda Co., Ltd.), GI-2000 (hydrogenated liquid polybutadiene having a hydroxy group, Mn 2100, hydroxyl value 40-55 mgKOH/g, available from Nippon Soda Co., Ltd.), GI-3000 (liquid polybutadiene having a hydroxy group, Mn 3000, hydroxyl value 25-35 mgKOH/g, Nippon Soda Co., Ltd.), UNISTOLE® P-801 (hydroxy group-containing polyolefin, Mn ≥ 5000, hydroxyl value 40 mgKOH/g, available from Mitsui Chemical, Inc.), and UNISTOLE® P-901 (hydroxy group-containing polyolefin, Mn ≥ 5000, hydroxyl value 50 mgKOH/g, available from Mitsui Chemical, Inc.).

The amount of the hydroxy group-containing polymer contained to 100 parts by weight of the base polymer is not particularly limited. The amount of the hydroxy group-containing polymer contained to 100 parts by weight of the base polymer is usually suitably about 1 part to 20 parts by weight, or preferably about 2 parts to 15 parts by weight (e.g. about 2.5 parts to 10 parts by weight).

As the hydroxy-reactive crosslinking agent, it is possible to use a compound having a functional group (e.g. isocyanate group, epoxy group, melamine group, aldehyde group, etc.) that is reactive with hydroxy group (preferably a compound having two or more hydroxy-reactive functional groups per molecule). The hydroxy-reactive crosslinking agent can be used in combination with a crosslinking agent that is unreactive to hydroxy group. While no particular limitations are imposed, in an embodiment comprising a hydroxy group-containing polymer and a hydroxy-reactive crosslinking agent together, the amount of the crosslinking agent used (when two or more species of crosslinking agents are used, their combined amount) can be, for instance, 0.1 part by weight or greater to 100 parts by weight of the base polymer; it is usually suitably 0.5 part by weight or greater. When the crosslinking agent is used in an amount of 1 part by weight or more (preferably 2 parts by weight or more, e.g. 3 parts by weight or more) to 100 parts by weight of the base polymer, greater effects tend to be obtained in increasing the residue-free removability. The maximum amount of the crosslinking agent used is not particularly limited. From the standpoint of the adhesive properties (e.g. the peel strength to non-target areas of a processing object), the amount of the crosslinking agent used to 100 parts by weight of the base polymer is suitably 25 parts by weight or less, preferably 20 parts by weight or less, or more preferably 15 parts by weight or less (e.g. 10 parts by weight or less).

In an embodiment, the hydroxy group-containing polymer content can be selected so that the A value in the equation (1) below is preferably 1 to 12000, more preferably 10 to 5000, or yet more preferably 25 to 2500 (typically 50 to 1000, e.g. 75 to 500).

$$A = \text{(hydroxyl value (mgKOH/g) of hydroxy group containing polymer)} \times \text{(parts by weight of hydroxy group containing polymer to 100 parts by weight of base polymer)} \tag{1}$$

With increasing A value, the easy-to-detach properties of the PSA layer tend to be enhanced. In addition, when the A value is not excessively large, the adhesiveness tends to increase.

In another embodiment, the hydroxy group-containing polymer content can be selected so that the B value in the equation (2) is preferably 0.1 to 20, more preferably 0.2 to 10, or yet more preferably 0.3 to 5, for instance, 0.4 to 3.

$$B = \text{(hydroxyl value (mgKOH/g) of hydroxy group containing polymer} \times \text{weight (g) of hydroxy group containing polymer) weight (g) of PSA layer} \tag{2}$$

With increasing B value, the easy-to-detach properties of the PSA layer tend to increase. When the B value is not excessively large, the adhesiveness tends to increase.

In an embodiment comprising a hydroxy group-containing polymer and a hydroxy-reactive crosslinking agent (e.g. an isocyanate-based crosslinking agent) together, there are no particular limitations to the relation of the amounts of the hydroxy group-containing polymer and the hydroxy-reactive crosslinking agent contained. The amount of the hydroxy group-containing polymer used to 1 part by weight of the hydroxy-reactive crosslinking agent can be, for instance, 0.1 part to 20 parts by weight. From the standpoint of effectively obtaining the advantages of the crosslinking, it is usually suitably 0.5 part to 15 parts by weight, preferably 1 part to 10 parts by weight, or more preferably greater than 1 part by weight and 5 parts by weight or less (e.g. 1.2 parts to 3 parts by weight).

The PSA composition may comprise one, two or more species of urethanation catalyst. In the PSA composition that comprises a hydroxy group-containing polymer and a hydroxy-reactive crosslinking agent (e.g. an isocyanate-based crosslinking agent) together, it is particularly meaningful to accelerate the crosslinking reaction with the inclusion of the urethanation catalyst. Examples of the urethanation catalyst include tin compounds such as dibutyltin dilaurate and dioctyltin dilaurate; carboxylic acid salts of metals such as zinc, cobalt, copper and bismuth; amine compounds such as 1,4-diazabicyclo[2.2.2]octane; chelates of metals such as iron, titanium, and zirconium. Salts of bismuth with organic acid (salts of bismuth with alicyclic organic acids such as salts of bismuth with resin acids containing abietic acid, neoabietic acid, d-pimaric acid, iso-d-pimaric acid, podocarpic acid, or a combination of two kinds or more thereof, as a main component; salts of bismuth with aromatic organic acids such as benzoic acid, cinnamic acid and p-oxycinnamic acid; and the like) can also be used. Among these, in view of the compatibility with the PSA and the urethanation reactivity, iron chelates, dibutyltin dilaurate, dioctyltin dilaurate and salts of bismuth with resin acids are preferable; in view of the reactivity, iron chelates are more preferable. The urethanation catalyst content is not particularly limited. For instance, it can be about 0.001 part to 2.0 parts by weight (preferably 0.005 part to 1.5 parts by weight, more preferably 0.008 part to 1.0 part by weight) to 100 parts by weight of the base polymer.

As long as the effects of this invention are not impaired, the PSA layer in the art disclosed herein may further comprise, as necessary, known additives that can be used in PSA, such as leveling agent, crosslinking aid, plasticizer, softener, colorant (dye, pigment, etc.), filler, antistatic agent, anti-aging agent, UV absorber, antioxidant, and photostabilizer.

As the anti-aging agent, for instance, a phenolic anti-aging agent can be preferably used. The amount of the anti-aging agent added to 100 parts by weight of the base polymer can be, for instance, 0.1 part to 10 parts by weight, or preferably 0.5 part to 5 parts by weight. An example of commercial products of such anti-aging agent is trade name NOCRAC NS-6 (available from Ouchi Shinko Chemical Industrial Co., Ltd.).

<Fabrication of masking sheets

The masking sheet disclosed herein can be formed by a heretofore known method. For instance, a direct method can be employed where the PSA composition is directly provided (typically applied) to a substrate as those described earlier and allowed to dry to form a PSA layer. A transfer method can also be employed where the PSA composition is provided to a releasable surface (release face) and allowed to dry to form a PSA layer on the surface and the PSA layer is transferred to a substrate. These methods can be combined as well. For the release face, a release liner surface, the substrate's back face that has been subjected to release treatment and the like can be used.

The PSA composition can be applied, for instance, using a heretofore known coater such as a gravure roll coater, a die coater, and a bar coater. From the standpoint of accelerating the crosslinking reaction, increasing the productivity, etc., the PSA composition is preferably dried with heat. The drying temperature can be, for instance, about 40 °C to 150 °C, or usually preferably about 60 °C to 130 °C.

The thickness of the PSA layer is not particularly limited and can be suitably adjusted in accordance with a certain purpose. The PSAlayer's thickness can be, for instance, about 1 $\mu$m to 100 $\mu$m. From the standpoint of the tightness of adhesion to the adherend surface, the thickness is favorably 5 $\mu$m or greater, or more preferably 10 $\mu$m or greater. In an application where it is adhered to a surface subject to shot peening, the PSA layer's thickness is preferably 15 $\mu$m or greater, or more preferably 20 $\mu$m or greater.

From the standpoint of inhibiting solution penetration via edge faces of the PSA layer (solution penetration caused by swelling of the PSA), the PSAlayer's thickness is preferably 80 $\mu$m or less, more preferably 60 $\mu$m or less, or yet more preferably 50 $\mu$m or less. In a favorable example of the masking sheet disclosed herein, the PSAlayer's thickness can be 20 $\mu$m to 40 $\mu$m.

The release liner is not particularly limited. For instance, it is possible to use a release liner having a release layer on the surface of a liner substrate such as resin film and paper (possibly laminated with a resin such as polyethylene), a release liner formed of a low-adhesive material such as a fluoropolymer (polytetrafluoroethylene, etc.) and a polyolefinic resin (polyethylene, polypropylene, etc.), and the like. The release layer may be formed by subjecting the liner substrate to surface treatment with a release agent such as silicone-based, long-chain alkyl-based, olefinic, and fluorine-based release agents as well as molybdenum sulfide.

In an embodiment of the art disclosed herein, it is preferable to use a release layer formed using a silicone-based release agent.

In another embodiment, a release layer formed with a non-silicone-based release agent can be used. Specific examples of the non-silicone-based release agent include long-chain alkyl-based release agents, olefinic release agents and fluorine-based release agents. Examples of preferable non-silicone-based release agents include long-chain alkyl-based release agents and olefinic release agents. In particular, long-chain alkyl-based release agents are preferable.

As for the release agent used for forming a release layer on the second face of the substrate, the same kinds can be preferably used.

The overall thickness (excluding the thickness of any release liner) of the masking sheet disclosed herein can be, but is not particularly limited to, for instance, 20 $\mu$m to 600 $\mu$m; it is usually suitably 40 $\mu$m to 250 $\mu$m, preferably 60 $\mu$m to 180 $\mu$m (more preferably 100 $\mu$m to 180 $\mu$m, e.g. 100 $\mu$m to 150 $\mu$m). For instance, in a preferable masking sheet, the substrate and the PSAlayer have a combined thickness in these ranges.

The masking sheet in the art disclosed herein can be made in an embodiment that satisfies $0.7 \text{ N mm} < Et' \cdot Hs^3$. Here, $Et'$ is the elastic modulus of the masking sheet and $Hs$ is the thickness of the substrate of the masking sheet. The $Et' \cdot Hs^3$ value is proportional to the flexural rigidity of the masking sheet. In an embodiment where $Et' \cdot Hs^3$ satisfies the above relation, the masking sheet tends to have a greater ability to prevent solution penetration. In particular, in the masking sheet for anodizing, it is meaningful to constitute the masking sheet so as to satisfy the relation. This can significantly inhibit solution penetration into the masking sheet during anodizing. For instance, the reason for this can be thought as follows: From the standpoint of the visual detectability, the masking sheet disclosed herein is preferably formed with a non-metal substrate. In a masking sheet using such a non-metal substrate (typically an insulator), during anodizing (when subjected to electric current)), the electric field is likely to be greatly distorted because of the adhered masking sheet. The distortion of the electric field may induce concentration of the current; and therefore, in the vicinity of the peripheries of the masking sheet using the non-metal substrate, formation of gas (gas formed mainly by electrolytic decomposition, i.e. electrolyzed gas) tends to be accelerated. The electrolyzed gas formed near the peripheries of the masking sheet may lift the masking sheet from the surface of the processing object to decrease the tightness of adhesion of the masking sheet, possibly causing solution penetration to proceed from the peripheries of the masking sheet. When the masking sheet is made more flexurally rigid and less susceptible to deformation, even during anodizing, the masking sheet resists the force of the electrolysis gas lifting the masking sheet (i.e. to suppress the electrolysis gas), making it easier to maintain its tight adhesion to the surface of the processing object. Because of this, solution penetration can be better prevented during anodizing.

The masking sheet may have an $Et' \cdot Hs^3$ value of greater than 0.8 N mm, preferably greater than 1.0 N mm, more preferably greater than 1.5 N mm, or yet more preferably greater than 2.0 N·mm (e.g. greater than 2.2 N mm). With increasing $Et' \cdot Hs^3$ value, solution penetration into the masking sheet tends to be inhibited to a greater extent in a CS treatment (e.g. in an anodizing process) given to a member on which the masking sheet is adhered to areas to be masked. The maximum $Et' \cdot Hs^3$ value is not particularly limited. In view of avoiding an excessively large thickness Ht of the masking sheet and from the standpoint of the availability of the substrate or the ease of its manufacturing, $Et' \cdot Hs^3$ is usually suitably about $10 \times 10^3$ N mm or less, or preferably about $1 \times 10^3$ N·mm or less (e.g. about $0.5 \times 10^3$ N·mm or less).

The elastic modulus $Et'$ of the masking sheet can be determined, using a commercial dynamic viscoelastometer. In particular, a sample (masking sheet) for analysis is cut to a 30 mm long by 5 mm wide strip to prepare a test piece.

With respect to the test piece, using a dynamic viscoelastometer (RSA-III available from TA Instruments) in a tension mode, at a chuck distance of 23 mm, a heating rate of 10 °C/min, a frequency of 1 Hz and a strain of 0.05 %, the tensile storage elastic modulus is determined as the value per unit cross-sectional area of substrate in a temperature range of 0 °C to 100 °C. From the results, the tensile storage elastic modulus per unit cross-sectional area of substrate at 25 °C can be determined. This value can be used as the elastic modulus Et' of the masking sheet.

Here, the elastic modulus Et' of the masking sheet is determined as the value per unit cross-sectional area of substrate. This is because, usually, the PSA's elastic modulus is negligibly small as compared to the substrate's elastic modulus (typically less than 1 % of the substrate's elastic modulus). Thus, when the cross-sectional area of the PSA layer is included in the cross-sectional area used for determination of the tensile storage elastic modulus, it makes it rather difficult to appropriately access the properties of the masking sheet to meet the objective of this invention. In addition, the PSA's elastic modulus is exceedingly small as compared to the substrate's elastic modulus; and therefore, from the standpoint of solving the technical problem of this invention, the elastic modulus determined with respect to the masking sheet sample by the method described above (i.e. tensile storage elastic modulus per unit cross-sectional area of substrate, Et') can be considered mostly the same as the substrate's elastic modulus Es' (measured in the same manner as for Et' except that a 30 mm long by 5 mm wide strip cut from the substrate is used as the sample). Accordingly, in the art disclosed herein, the substrate's elastic modulus Es' can be used as a substitute for the elastic modulus Et' of the masking sheet or as an approximation thereof that is satisfactory at least for practical use. As used herein, Et' and Es' are interchangeable unless otherwise noted. For instance, $Et' \cdot Hs^3$ can be read as $Es' \cdot Hs^3$ and vice versa.

The elastic modulus Et' of the masking sheet is not particularly limited. In particular, Et' can be, for instance, 0.3 GPa or greater (typically 0.5 GPa or greater). From the standpoint of the capability of being highly proof against solution penetration even in a thinner masking sheet, Et' is advantageously 1.0 GPa or greater (i.e. $1.0 \times 10^3$ N/mm$^2$ or greater), preferably 1.5 GPa or greater, or more preferably 2.0 GPa or greater. The maximum Et' value is not particularly limited. From the standpoint of the availability of the substrate or the ease of its manufacturing, it is usually suitably 30 GPa or less, preferably 20 GPa or less, or more preferably 10 GPa or less (e.g. 6.0 GPa or less). Et' can be adjusted by the composition of the substrate and the materials used therein as well as by the combination of these, etc.

The thickness Ht of the masking sheet is not particularly limited. The art disclosed herein can be implemented, for instance, in an embodiment where Ht is 7 mm or less (typically 5 mm or less, e.g. 1 mm or less). In a preferable embodiment, Ht can be 0.50 mm or less; it is preferably 0.30 mm or less, more preferably 0.25 mm or less (e.g. 0.20 mm or less), or yet more preferably 0.15 mm or less (typically less than 0.15 mm). When a liquid such as a solvent-based paint is supplied (e.g. sprayed) to an object on which the masking sheet is adhered, a smaller thickness Ht of the masking sheet makes it easier to reduce the amount of the liquid that accumulates on the edge faces of the masking sheet. This is particularly meaningful when the masking sheet disclosed herein is used for masking in a coating process (typically a coating process using a solvent-based paint), etc. This can bring about effects such as increased precision of coating and greater residue-free removability when removing the masking sheet after the coating process. The minimum Ht is not particularly limited. It is usually suitably 0.04 mm or greater, or preferably 0.06 mm or greater. The masking sheet disclosed herein can be preferably made in an embodiment where Ht is greater than 0.08 mm (typically 0.09 mm or greater, e.g. 0.10 mm or greater). The thickness Ht of the masking sheet refers to the thickness of the portion that is applied to the adherend (processing object) and excludes the thickness of the release liner.

The thickness Hs of the substrate constituting the masking sheet is not particularly limited. Hs can be, for instance, 5 mm or less (typically 3 mm or less). From the standpoint of the handling properties and the ease of processing the masking sheet, Hs is usually suitably 1 mm or less (e.g. 0.50 mm or less). In a preferable embodiment, Hs can be 0.30 mm or less; it is preferably 0.20 mm or less, or more preferably 0.15 mm or less (e.g. 0.12 mm or less). With the use of a substrate having a small Hs value, it is easier to make the masking sheet with a smaller thickness Ht. The minimum Hs value is not particularly limited. It is usually suitably 0.03 mm or greater, or preferably 0.05 mm or greater (typically greater than 0.05 mm). Hs can also be 0.07 mm or greater, or even 0.08 mm or greater (e.g. 0.10 mm or greater).

The modulus elasticity Es' of the substrate constituting the masking sheet is not particularly limited. Es' can be, for instance, 0.3 GPa or greater (typically 0.5 GPa or greater). From the standpoint of the ease of constructing the masking sheet to be highly proof against solution penetration while using a thinner substrate, Es' is advantageously 1.0 GPa or greater, preferably 1.5 GPa or greater, or more preferably 2.0 GPa or greater. The maximum Es' value is not particularly limited. From the standpoint of the availability of the substrate or the ease of its manufacturing, it is usually suitably 30 GPa or less, preferably 20 GPa or less, or more preferably 10 GPa or less (e.g. 6.0 GPa or less). Es' can be adjusted by the composition of the substrate and the materials used therein as well as by the combination of these, etc.

While no particular limitations are imposed, in view of preventing its peeling and falling due to the stress caused by the circulating chemical solution, rinse water, etc., the masking sheet disclosed herein preferably has a 180° peel strength of 1.5 N/25mm or greater (e.g. 2.0 N/25mm or greater) to a stainless steel (SUS) plate. From the standpoint of the efficiency of removal work and the residue-free removability, the 180° peel strength of the masking sheet is preferably 7.0 N/25mm or less (e.g. 5.0 N/25mm or less).

The 180° peel strength can be determined based on JIS Z0237, by applying a test piece to a SUS plate at a measurement temperature of 23 °C and peeling the test piece 30 minutes later at a tensile speed of 300 mm/min.

While no particular limitations are imposed, the masking sheet disclosed herein can be made in an embodiment where it has a 90° peel strength (to-duralumin 90° peel strength) of, for instance, about 0.5 N/20mm or greater when determined using a smooth duralumin A2024 plate as the adherend. From the standpoint of the tightness of adhesion to the processing object, etc., the to-duralumin 90° peel strength is usually advantageously 1.0 N/20mm or greater, or preferably 1.5 N/20mm or greater (e.g. 2.0 N/20mm or greater). From the standpoint of greater retention of the tightness of adhesion to the processing object, the to-duralumin 90° peel strength is preferably 3.0 N/20mm or greater; it can also be, for instance, 4.5 N/20mm or greater. The maximum to-duralumin 90° peel strength is not particularly limited. From the standpoint of the efficiency of removal work and the residue-free removability, it is usually suitably 25 N/20mm or less, or preferably 20 N/20mm or less (typically 15 N/20mm or less, e.g. 10 N/20mm or less). The to-duralumin 90° peel strength can be determined based on JIS Z0237 as follows: at a measurement temperature of 23 °C, the masking sheet is applied to a duralumin plate (a smooth duralumin A2024 plate); after 30 minutes, the masking sheet is peeled at a tensile speed of 300 mm/min in the 90° direction relative to the surface of the duralumin plate.

The to-duralumin 90° peel strength can be adjusted, for instance, by the composition of the PSA layer forming the PSA sheet, the thickness of the PSAlayer, etc.

While no particular limitations are imposed, the masking sheet disclosed herein can be made in an embodiment where it has a 90° peel strength to adherend (i.e. non-target areas of a processing object) (to-adherend 90° peel strength) of, for instance, about 0.5 N/20mm or greater. From the standpoint of the tightness of adhesion to the processing object, etc., the to-adherend 90° peel strength is usually advantageously 1.0 N/20mm or greater, or preferably 1.5 N/20mm or greater (e.g. 2.0 N/20mm or greater). From the standpoint of obtaining appropriate tightness of adhesion to the adherend, the to-adherend 90° peel strength is preferably 3.0 N/20mm or greater; it can also be, for instance, 4.5 N/20mm or greater. The maximum to-adherend 90° peel strength is not particularly limited. From the standpoint of the efficiency of removal work and the residue-free removability, it is usually suitably 25 N/20mm or less, or preferably 20 N/20mm or less (typically 15 N/20mm or less, e.g. 10 N/20mm or less). The to-adherend 90° peel strength can be determined in the same manner as for the to-duralumin 90° peel strength expect for the adherend used in the measurement. The adherend used in the measurement of the to-adherend 90° peel strength is not limited to an adherend completely identical to the object to which the PSAis actually applied; it can be anything that has the quality of material or the surface condition that gives a measurement result approximately comparable to the 90° peel strength to the object.

While no particular limitations are imposed, the masking sheet disclosed herein preferably show great residue-free removability to certain adherend. For instance, in the 180° peel strength measurement, it is preferable that it does not cause leftover adhesive residue on the SUS plate as the adherend. For instance, in the measurement of the to-duralumin 90° peel strength and the to-adherend 90° peel strength, it preferably causes no leftover adhesive residue on the surface after its removal. A preferable masking sheet satisfies at least one of these properties, or more preferably two or more thereof.

While no particular limitations are imposed, in the masking ability test described later in Experiment 1, the masking sheet disclosed herein has an average solution penetration distance of preferably 5 mm or less, or more preferably 3 mm or less. In addition, in the solution penetration proof test described later in Experiment 2, it has a solution penetration distance (on a smooth duralumin plate) of preferably 5 mm or less, more preferably 3 mm or less, or yet more preferably 1 mm or less. The masking sheet that satisfies one or both of these conditions can be preferably used in an embodiment where, after the anodizing process, a subsequent process is carried out with the masking sheet being continuously adhered on the adherend.

In a coating (painting) step carried out after the CS treatment step (e.g. an anodizing step), the PSA product can be used to mask coating-unrequired areas (non-target areas) as well. In a preferable embodiment of the coating step, the processing object may be coated while it still (continuously) has the masking sheet adhered thereon during the CS treatment. As described here, by continuously using the masking sheet used in the CS treatment step through the downstream coating step, the hassle of replacing the masking sheet (generally including the work of removing the masking sheet used in the CS treatment step from the processing object, the work of cleaning the surface of the processing object after the removal, and applying a new masking sheet) can be omitted to increase the productivity of a chemical solution-treated metal product. It can also reduce the consumption of the masking sheet; and thus, it is preferable from the standpoint of saving resources as well.

The concept of paint (coating material) referred to herein encompasses an undercoat (sometimes called a primer), intermediate coat, and a finish coat (sometimes called a topcoat). The form of the paint used in the coating step is not particularly limited. It can be in forms of an aqueous paint, a solvent-based paint, a powder paint, etc.

When the paint accumulates at an edge face (i.e. at a bump formed with a periphery of the masking sheet and the processing object) of the masking sheet in the coating step, depending on the composition of the solvent forming the paint and the composition of the PSA layer, the PSA forming the PSAlayer may dissolve into the paint accumulated at the edge face of the PSAlayer. Subsequently, when the paint accumulated at the edge face of the PSAlayer is allowed to dry the PSA dissolved out of the PSAlayer typically forms a thin film that spreads outward from the masking sheet.

This thin film is likely to be left (as leftover adhesive residue) on the processing object when the masking sheet is removed. Thus, from the standpoint of increasing the residue-free removability, it is desirable to reduce paint accumulation (especially accumulation of a solvent-based paint) at edge faces of the masking sheet. To reduce paint accumulation, the smaller the thickness Ht of the masking sheet is, the more advantageous it is. The masking sheet used continuously from the CS treatment step (e.g. an anodizing step) through the coating step has a thickness Ht of preferably 0.30 mm or less, more preferably 0.25 mm or less (e.g. 0.20 mm or less), or yet more preferably 0.15 mm or less (typically less than 0.15 mm).

[Examples]

Several working examples related to the present invention are described below, but the present invention is not limited to these specific examples. In the description below, "parts" and "%" are by weight unless otherwise specified.

1. Experiment 1

<Preparation of PSA composition>

(PSA composition A1)

In toluene, were dissolved 100 parts of a natural rubber (Mooney viscosity $MS_{1+4}$(100 °C) = 75), 30 parts of a styrene-isoprene block copolymer (trade name QUINTAC 3460C available from Zeon Corporation, radial structure, 25 % styrene content), 80 parts of an anhydrous maleic acid-modified C5/C9-based petroleum resin (trade name QUINTONE D-200 available from Zeon Corporation), 40 parts of a phenol-modified rosin (trade name SUMILITE PR12603N available from Sumitomo Bakelite Co., Ltd.) and 1 part of a phenol-based anti-aging agent (trade name NOCRAC NS-6 available from Ouchi Shinko Chemical Industrial Co., Ltd.). To this, was added 3 parts of an aromatic isocyanate (trade name CORONATE L available from Nippon Polyurethane Industry Co., Ltd.) as a crosslinking agent to prepare a PSA composition A1.

(PSAcomposition B1)

In 300 parts of toluene, were dissolved 90 parts of a natural rubber (Mooney viscosity $MS_{1+4}$(100 °C) = 55) and 10 parts of a styrene-butadiene rubber (SBR). To this, were added 60 parts of a terpene-based resin as a tackifier resin, 10 parts of a phenol resin (alkylphenol-formaldehyde resin) and 3 parts of diisopropoxyaluminum ethyl acetoacetate as a crosslinking agent to prepare a PSA composition B1.

<Fabrication of masking sheets>

(Example 1)

The PSA composition A1 was applied to one face of a release liner obtained by treating high-grade paper laminated with polyethylene resin on each side with a silicone-based release agent, allowed to dry in an oven at 100 °C with air circulation for three minutes to form a 40 μm thick PSAlayer. The first face of a 75 μm thick PET film (trade name LUMIRROR available from Toray Industries, Inc.) as the substrate was adhered to the PSAlayer on the release liner to obtain a masking sheet according to Example 1.

(Example 2)

The applied amount of the PSA composition A1 was adjusted to form a 20 μm thick PSAlayer. As the substrate, was used a 100 μm thick PET film (trade name LUMIRROR available from Toray Industries, Inc.). Otherwise in the same manner as Example 1, a masking sheet according to this Example was obtained.

(Example 3)

The applied amount of the PSA composition A1 was adjusted to form a 30 μm thick PSAlayer. Otherwise in the same manner as Example 2, a masking sheet according to this Example was obtained.

(Example 4)

The applied amount of the PSA composition A1 was adjusted to form a 40 μm thick PSAlayer. Otherwise in the same manner as Example 2, a masking sheet according to this Example was obtained.

(Example 5)

In this Example, as the release liner, was used a PET film treated with a silicone-based release agent on one face; as the substrate, was used an 80 μm thick polybutylene terephthalate (PBT) film (trade name NOVADURAN available from Mitsubishi Engineering-Plastics Corporation). Otherwise in the same manner as Example 3, a masking sheet according to this Example was obtained.

(Example 6)

In this Example, as the substrate, was used 80 μm thick aluminum foil (trade name ALUMINUM FOIL C, soft aluminum foil available from Toyo Aluminum K. K.). Otherwise in the same manner as Example 3, a masking sheet according to this Example was obtained.

<Measurement of haze value>

The masking sheet according to each Example was cut to a 50 mm wide by 50 mm long size and the release liner was removed. The haze value (%) of the resultant was measured based on JIS K7136, using a haze and transmittance meter under trade name HAZEMETER HM-150 available from Murakami Color Research Liboratory.

<See-through quality test>

On one face of high-grade paper of 95 % brightness (ISO), 75 g/m$^2$ grammage and 0.098 mm thickness, lines of numbers were printed in the Century font of 2 points to 16 points (by 1 point increment) so that Arabic numerals 0 to 9 appear randomly in each line. A general laser printer was used for the printing. The numbers were printed in black. The resulting paper was used as test paper for evaluating the see-through quality.
The masking sheet according to each Example was cut to a 10 mm wide by 50 mm long size to prepare a test piece. The release liner was removed from the test piece and the test piece was press-bonded to the printed face of the test paper. The press-bonding was carried out with a 2 kg roller moved back and forth once.
The test paper on which the masking sheet was adhered was fixed approximately at an eye level onto a vertical wall in a room adjusted to an illuminance of 400 lux to 500 lux with a fluorescent light on the ceiling. The test paper was visually inspected by a test operator with 1.0 vision standing 1 m away from the wall to determine the smallest font size of numbers under the masking sheet that were legible from the second face side (back face side) of the masking sheet. For instance, when 8-point numbers were legible, but 7-point numbers were illegible, the lower limit of legible font size (minimum legible font size) was determined to be 8 points. Here, that numbers under the masking sheet are legible means that all numbers from 0 to 9 can be identified. When the presence of numbers under the masking sheet was not detected at all, when the presence of some letters was found, but the letters were not identified, or when some of the numbers from 0 to 9 were not identified, it was determined to be unsatisfactory with respect to the legibility requirement.
The results of the see-through quality test are shown in Table 1 as follows: "G" (good see-through quality) when minimum legible font size ≤ 10 points, and "P" (poor see-through quality) when minimum legible font size ≥ 11.

<Solution penetration test with a basic solution>

(Detectability test)

The masking sheet according to each Example was cut to a 20 mm wide by 100 mm long size to prepare a test piece. The release liner was removed and the test piece was press-bonded to an aluminum plate (50 mm wide, 125 mm long, 2.0 mm thick) having a smooth surface. The press-bonding was carried out with a 2 kg roller moved back and force once. After press-bonded, the resultant was aged under an atmosphere at 23 °C and 50 % RH for 48 hours to obtain a measurement sample.
A 5 % aqueous NaOH solution (basic solution) was put in a thermostatic bath and kept at 60 °C. In this, the measurement sample was immersed for 10 minutes. Subsequently, the measurement sample was removed from the solution. With the test piece still adhered on the aluminum plate, the test piece was visually inspected to evaluate whether or not the solution penetration was visually detectable. The inspection was performed by a test operator with 1.0 vision 50 cm straight away from the second face of the test piece.

The results of the detectability test are shown in Table 1 as follows: "G" (good visual detectability) when solution penetration was visually detectable, and "P" (poor visual detectability) when visually undetectable.

(Masking ability test)

With respect to each of the measurement samples with which solution penetration was visually detectable in the detectability test, the average distance from the peripheries of the test pieces to the inner ends of regions with solution penetration (i.e. the average solution penetration distance) was determined in the 60 mm long central areas of the two long sides of the test piece (i.e. the segments of the respective long sides excluding 20 mm long segments from the two ends of the long sides). With respect to the measurement sample of Example 6 with which solution penetration was not visually detectable in the detectability test, the test piece was removed from the aluminum plate to inspect the presence of solution penetration, and the average solution penetration distance was determined in the same manner.

The results of the masking ability test are shown in Table 1 as follows: "Pass" when average solution penetration distance $\leq$ 3 mm, and "Fail" when average solution penetration distance > 3mm.

(Residue-free removability test)

The measurement sample removed from the solution was gently washed with water and allowed to naturally dry at room temperature. After dried, the test piece was manually peeled from the aluminum plate by a test operator. The peeling was carried out at a tensile speed of about 0.3 m/min in the 90° direction. After the test piece was removed, the surface of the aluminum plate was visually inspected for the presence of leftover adhesive residue.

The results of the residue-free removability test are shown in Table 1 as follows: "G" (good residue-free removability) when no leftover adhesive residue was found, and "P" (poor residue-free removability) when leftover adhesive residue was found.

<Solution penetration test with an acidic solution>

15 % sulfuric acid was used in place of the basic solution and the immersion was carried out at 35 °C for 35 minutes. Otherwise in the same manner as the solution penetration test using the basic solution, the detectability, the masking ability and the residue-free removability were tested. The results are shown in Table 1.

Table 1 shows the test results of the protection sheets according to Examples 1 to 6.

[Table 1]

Table 1

| | | | Ex. 1 | Ex. 2 | Ex. 3 | Ex. 4 | Ex. 5 | Ex. 6 |
|---|---|---|---|---|---|---|---|---|
| Composition | Substrate | Material | PET | PET | PET | PET | PBT | Aluminum |
| | | Thickness (µm) | 75 | 100 | 100 | 100 | 80 | 80 |
| | PSA layer | Thickness (µm) | 40 | 20 | 30 | 40 | 30 | 30 |
| Properties | | Haze value (%) | 18 | 14 | 19 | 22 | 80 | Opaque |
| | | See-through quality | G | G | G | G | G | P |
| | Solution penetration test NaOHaq (5%) 60 °C, 10 min | Detectability | G | G | G | G | G | P |
| | | Masking ability | Pass | Pass | Pass | Pass | Pass | Fail |
| | | Residue-free removability | G | G | G | G | G | G |
| | Solution penetration test Sulfuric acid (15%) 35 °C, 35 min | Detectability | G | G | G | G | G | P |
| | | Masking ability | Pass | Pass | Pass | Pass | Pass | Pass |
| | | Residue-free removability | G | G | G | G | G | G |

As shown in Table 1, with respect of each of the masking sheets of Examples 1 to 5, solution penetration was visually detectable from the outer face without removing the masking sheet. These masking sheets showed good masking ability with respect to both the acidic and basic solutions, and also showed excellent residue-free removability. On the other hand, with respect to the masking sheet of Example 6 using a metal foil substrate, solution penetration was not visually detectable from the outer face, and the extent of solution penetration could not be checked without removing the masking sheet.

It is noted that a masking sheet according to Example 7 was fabricated using the PSA composition B 1 in place of the PSA composition A1 but otherwise in the same manner as Example 3, subjected to the same haze value measurement and see-through quality test, and exhibited a haze value of 23 % and G-grade see-through quality. When the masking sheet according to Example 7 was subjected to the same solution penetration test as for Examples 1 to 6, it showed Pass levels of see-through quality and masking ability with respect to both the basic solution and the acidic solution and was found capable of solving the problem of this invention. With respect to the residue-free removability it fell short of the ability of the masking sheet of Example 3, yet was at a practical level.

2. Experiment 2

<Preparation of PSA composition>

(PSA composition A2)

In toluene, were dissolved 100 parts of a natural rubber (Mooney viscosity $MS_{1+4}$(100 °C) = 75), 30 parts of a styrene-isoprene block copolymer (trade name QUINTAC 3460C available from Zeon Corporation, radial structure, 25 % styrene content), 80 parts of an anhydrous maleic acid-modified C5/C9-based petroleum resin (trade name QUINTONE D-200 available from Zeon Corporation), 40 parts of a phenol-modified rosin (trade name SUMILITE PR12603N available from Sumitomo Bakelite Co., Ltd.) and 1 part of a phenol-based anti-aging agent (trade name NOCRAC NS-6 available from Ouchi Shinko Chemical Industrial Co., Ltd.). To this, was added 3 parts of an aromatic isocyanate (trade name CORONATE L available from Nippon Polyurethane Industry Co., Ltd.; a tolylene diisocyanate-trimethylolpropane adduct) as a crosslinking agent to prepare a PSA composition A2.

(PSA composition A3)

In toluene, were dissolved 100 parts of a natural rubber (Mooney viscosity $MS_{1+4}$(100 °C) = 75), 30 parts of a styrene-isoprene block copolymer (trade name QUINTAC 3460C available from Zeon Corporation, radial structure, 25 % styrene content), 200 parts of an anhydrous maleic acid-modified C5/C9-based petroleum resin (trade name QUINTONE D-200 available from Zeon Corporation), 40 parts of a phenol-modified rosin (trade name SUMILITE PR12603N available from Sumitomo Bakelite Co., Ltd.), 4.5 parts of a hydroxy group-containing polymer (trade name EPOL available from Idemitsu Kosan Co., Ltd; hydrogenated liquid polyisoprene having terminal hydroxy groups, Mn 2500, hydroxyl value 50.5 mgKOH/g) and 1 part of a phenol-based anti-aging agent (trade name NOCRAC NS-6 available from Ouchi Shinko Chemical Industrial Co., Ltd.). To this, was added 3 parts of an aromatic isocyanate (trade name CORONATE L available from Nippon Polyurethane Industry Co., Ltd.; a tolylene diisocyanate-trimethylolpropane adduct) as a crosslinking agent to prepare a PSA composition A3.

(PSA composition A4)

In toluene, were dissolved 100 parts of a natural rubber, 30 parts of a terpene resin (trade name YS RESIN PX1150 available from Yasuhara Chemical Co. Ltd.) and 3 parts of a phenol-based anti-aging agent (trade name NOCRAC NS-6 available from Ouchi Shinko Chemical Industrial Co., Ltd.) to prepare a PSA composition A4. As the natural rubber, a pale crepe (thick pale crepe 1x) with Mooney viscosity $MS_{1+4}$(100°C) $\geq$ 90 was used without further mastication.

<Fabrication of masking sheets>

(Example 8)

The PSA composition A2 was applied to one face of a release liner obtained by treating high-grade paper laminated with polyethylene resin on each side with a silicone-based release agent, allowed to dry in an oven with air circulation at 100 °C for three minutes to form a 30 $\mu$m thick PSA layer. The first face of a 125 $\mu$m thick PET film (trade name LUMIRROR available from Toray Industries, Inc.) as the substrate was adhered to the PSA layer on the release liner to obtain a masking sheet according to Example 8. The release liner was left on the PSA layer as it was and used to protect the adhesive face of the masking sheet.

(Examples 9, 10)

As the substrate, PET films of 100 $\mu$m thickness (Example 9) and 75 $\mu$m thickness (Example 10) (each under trade name LUMIRROR, available from Toray Industries, Inc.) were used, respectively. Otherwise in the same manner as Example 8, masking sheets according to Examples 9 and 10 were obtained.

(Example 11)

As the substrate, a PEN film of 75 $\mu$m thickness (available from Teijin Limited) was used. Otherwise in the same manner as Example 8, a masking sheet according to Example 11 was obtained.

(Examples 12, 13)

As the substrate, PPS films of 75 μm thickness (Example 12) and 100 μm (Example 13) (both available from Toray Industries, Inc.) were used. Otherwise in the same manner as Example 8, masking sheets according to Example 12 and 13 were obtained.

(Example 14)

In place of the PSA composition A2, the PSA composition A3 was used. Otherwise in the same manner as Example 9, a masking sheet according to Example 14 was obtained.

(Example 15)

In place of the PSA composition A2, the PSA composition A4 was used. Otherwise in the same manner as Example 9, a masking sheet according to Example 15 was obtained.

<Solution penetration proof test>

(On smooth duralumin plate)

A circle of 25 mm diameter was punched out from the masking sheet according to each Example along with the release liner protecting the adhesive face. In a standard environment at 23 °C and 65 % RH, the release liner was removed from the punched out masking sheet (test piece) and the exposed adhesive face was press-bonded to an adherend with a 2 kg roller moved back and forth once. As the adherend, a pre-degreased duralumin plate (a smooth duralumin A2024 plate) of 200 mm length, 100 mm width and 1 mm thickness was used. The sample to which the test piece was thus adhered was left standing in the standard environment for 30 minutes, suspended in a chromic acid anodizing solution, and anodized at a liquid temperature of 40 °C at a voltage of 20 V for 35 minutes. With respect to the masking sheet according to each Example, five samples were fabricated and subjected to the anodizing process (i.e. N = 5).

While the masking sheet (test piece) is adhered on the anodized sample, the state of solution penetration was visually inspected from the back face of the masking sheet. When solution penetration was observed, the distance of the solution penetration was measured from the periphery of the test piece in the radial direction and the maximum distance of penetration in each sample was recorded as the solution penetration distance of the sample. With respect to the masking sheet according to each Example, the average value of the solution penetration distances of the five samples was determined.

(On milled duralumin plate)

In place of the smooth duralumin plate, a duralumin plate having a milled surface (a milled plate) was used as the adherend. Otherwise in the same manner as the above, the adherend with the masking sheet according to each Example adhered thereon was anodized and the solution penetration distance was determined.

The results are shown in Table 2.

[Table 2]

Table 2

|  | Substrate Material | PSA species | Et' (GPa) | Hs (mm) | Et'×Hs³ (N·mm) | Ht (mm) | Penetration distance (mm) | |
|---|---|---|---|---|---|---|---|---|
|  |  |  |  |  |  |  | smooth | milled |
| Ex. 8 | PET | A2 | 2.34 | 0.125 | 4.57 | 0.155 | 0.3 | 0.6 |
| Ex. 9 | PET | A2 | 2.34 | 0.100 | 2.34 | 0.130 | 0.4 | 0.6 |
| Ex. 10 | PET | A2 | 2.34 | 0.075 | 0.99 | 0.105 | 0.9 | 1.1 |
| Ex. 11 | PEN | A2 | 5.11 | 0.075 | 2.16 | 0.105 | 0.8 | 1.0 |

(continued)

| | Substrate Material | PSA species | Et' (GPa) | Hs (mm) | Et'×Hs³ (N·mm) | Ht (mm) | Penetration distance (mm) | |
|---|---|---|---|---|---|---|---|---|
| | | | | | | | smooth | milled |
| Ex. 12 | PPS | A2 | 3.54 | 0.075 | 1.49 | 0.105 | 0.8 | 1.0 |
| Ex. 13 | PPS | A2 | 3.54 | 0.100 | 3.54 | 0.130 | 0.5 | 0.8 |
| Ex. 14 | PET | A3 | 2.34 | 0.100 | 2.34 | 0.130 | 0.3 | 0.5 |
| Ex. 15 | PET | A4 | 2.34 | 0.100 | 2.34 | 0.130 | 0.2 | 0.2 |

As shown in Table 2, the masking sheets of Examples 8 to 15 were all suitably proof against solution penetration. Among them, with respect to the masking sheet of Example 15 comprising a PSA layer formed from the PSA composition A4, the solution penetration distance did not change much between the smooth plate and the milled plate, exhibiting excellent adaptability to an adherend having an uneven surface. Comparison of Examples 8 to 10 indicates that with increasing $Et' \cdot Hs^3$ value, the solution penetration distance tends to decrease. It is noted that in each of the masking sheets of Examples 8 to 15, the areas where solution penetration occurred were clearly observable when inspected from the outer face of the masking sheet. When subjected to CS treatment under the same conditions as the anodizing process but without the applied electric current, the solution penetration distance was less than 0.1 mm in all Examples 8 to 15.

In the solution penetration proof test using the smooth duralumin plate as the adherend, the anodized sample according to each Example was gently washed with water and allowed to naturally dry at room temperature. Subsequently, with respect to two samples among the five samples, the test operator peeled the test pieces from the duralumin plates by hand. The peeling was carried out at a tensile speed of about 0.3 m/min in the 90° direction relative to the surface of the duralumin plate. After the test pieces were peeled, the surfaces of the duralumin plates were visually inspected for the presence of leftover adhesive residue. As a result, leftover adhesive residue was not observed in any of Examples 8 to 15.

With respect to the remaining three samples among the five samples, a solvent-based paint EPORA#3000S (available from Nihon Tokushu Toryo Co., Ltd.) was sprayed over the entire surfaces of the duralumin plates on the sides on which the test pieces were adhered. The paint was sprayed in an amount to form a coating layer of about 10 $\mu$m thickness after dried. The sprayed paint was allowed to dry at about 100 °C. When the paint was sufficiently dried and cured, the test operator peeled the test pieces from the duralumin plates by hand. The peeling was carried out at a tensile speed of about 0.3 m/min in the 90° direction relative to the surface of the duralumin plate. After the test pieces were peeled, the surfaces of the duralumin plates were visually inspected and none of them was found with leftover adhesive residue.

With respect to the masking sheet of Example 14, the 90° peel strength (to-duralumin 90° peel strength) was 6.5 N/20mm when determined by the method described earlier, using a smooth duralumin A2024 plate as the adherend. With respect to each of the masking sheets of Examples 8 to 13 and 15, the to-duralumin 90° peel strength was 1.0 N/20mm or greater (more specifically, 3.0 N/20mm or greater, but 25 N/20mm or less) when determined in the same manner. With respect to each of the masking sheets of Examples 8 to 15, no leftover adhesive residue was observed on the duralumin plate, either.

[Reference Signs List]

1: substrate
1A: first face
1B: second face
2: PSA layer
2a: PSA layer of first PSA piece
2b: PSA layer of second PSA piece
2A: surface (adhesive face)
3: release liner
10, 20, 30, 40, 50: masking sheets for chemical solution treatment
10a: first PSA piece (masking sheet)

10b: second PSA piece
10B: outer face
22, 32, 42: highly-detectable areas
24, 34, 44: poorly-detectable areas
43, 53: markers
100: PSA sheet with release liner (PSA product)

**Claims**

1. Use of a masking sheet for chemical solution treatment in an anodizing process of a metal member, the masking sheet comprising

    a substrate having first and second faces, and
    a pressure-sensitive adhesive layer placed on the first face side of the substrate,
    with the masking sheet being constituted so that penetration of a chemical solution into the masking sheet is visually detectable when inspected from the outer face side of the masking sheet, as defined in the specification, wherein the masking sheet has a haze value of 90% or lower at least in some areas, wherein the substrate comprises a non-metal substrate, and wherein the pressure-sensitive adhesive layer is formed of a rubber-based pressure-sensitive adhesive,
    wherein the haze value is expressed by the equation Th (%) = $Td/Tt \times 100$, wherein Th is the haze value (%), Td is the diffused light transmittance, and Tt is the total light transmittance, wherein the haze value (%) is measured based on JIS-K7136,
    wherein the substrate comprises a resin film,
    wherein the resin film is selected from the group comprising polyester resins, polyolefinic resins, polyamide resins, polyimide resins, polyamide-imide resins, polyether ether ketone resins, polyethersulfones, polyphenylene sulfide resins, polycarbonate resins, polyurethane resins, ethylene-vinyl acetate resins, fluororesins, such as polytetrafluoroethylene, acrylic resins, or blends thereof,
    wherein the rubber-based pressure-sensitive adhesive comprises a natural rubber as the rubber-based polymer.

2. The use according to Claim 1, constituted so that areas where the solution penetration is relatively highly visually detectable and areas where it is relatively poorly visually detectable are present when seen from the outer face side of the masking sheet, wherein the relatively highly visually detectable areas and the relatively poorly visually detectable areas are defined as being areas having a difference in haze value being 15% or greater.

3. The use according to any one of Claims 1 or 2, having a marker used to determine the extent of solution penetration.

4. The use according to Claim 3, wherein the natural rubber has a Mooney viscosity $MS_{1+4}$(100°C) of 80 or higher.

5. The use according to any one of Claims 1 to 4, wherein the pressure-sensitive adhesive layer comprises a tackifier, the tackifier accounting for 10 % to 85 % by weight of the pressure-sensitive adhesive layer.

6. The use according to any one of Claims 1 to 5, wherein the masking sheet is being adhered to a surface of a shot peened metal member.

7. Masking method for a chemical solution treatment, comprising using a masking sheet in an anodizing process of a metal member

    the masking sheet comprising
    a substrate having first and second faces, and
    a pressure-sensitive adhesive layer placed on the first face side of the substrate,
    with the masking sheet being constituted so that penetration of a chemical solution into the masking sheet is visually detectable when inspected from the outer face side of the masking sheet, as defined in the specification, wherein the masking sheet has a haze value of 90% or lower at least in some areas, wherein the substrate comprises a non-metal substrate, and wherein the pressure-sensitive adhesive layer is formed of a rubber-based pressure-sensitive adhesive,
    wherein the haze value is expressed by the equation Th (%) = $Td/Tt \times 100$, wherein Th is the haze value (%), Td is the diffused light transmittance, and Tt is the total light transmittance, wherein the haze value (%) is measured based on JIS-K7136,

wherein the substrate comprises a resin film,

wherein the resin film is selected from the group comprising polyester resins, polyolefinic resins, polyamide resins, polyimide resins, polyamide-imide resins, polyether ether ketone resins, polyethersulfones, polyphenylene sulfide resins, polycarbonate resins, polyurethane resins, ethylene-vinyl acetate resins, fluororesins, such as polytetrafluoroethylene, acrylic resins, or blends thereof,

wherein the rubber-based pressure-sensitive adhesive comprises a natural rubber as the rubber-based polymer.

**Patentansprüche**

1. Verwendung einer Maskierungsfolie für eine Behandlung mit einer chemischen Lösung in einem Anodisierungsverfahren eines Metallteils, wobei die Maskierungsfolie umfasst:

    ein Substrat, besitzend erste und zweite Flächen, und
    eine druckempfindliche Klebstoffschicht, angebracht auf der ersten Flächenseite des Substrats,
    wobei die Maskierungsfolie so beschaffen ist, dass das Eindringen einer chemischen Lösung in die Maskierungsfolie visuell nachweisbar ist, wenn sie von der Außenflächenseite der Maskierungsfolie, wie in der Beschreibung definiert, untersucht wird, wobei die Maskierungsfolie zumindest in einigen Bereichen einen Trübungswert von 90 % oder weniger besitzt, wobei das Substrat ein nicht-metallisches Substrat umfasst, und wobei die druckempfindliche Klebstoffschicht aus einem druckempfindlichen Klebstoff auf Kautschukbasis gebildet ist,
    wobei der Trübungswert durch die Gleichung Th (%) = Td/Tt×100 ausgedrückt wird, wobei Th der Trübungswert (%) ist, Td die Durchlässigkeit für diffuses Licht ist und Tt die Gesamtlichtdurchlässigkeit ist, wobei der Trübungswert (%) auf der Grundlage von JIS-K7136 gemessen wird,
    wobei das Substrat eine Harzfolie umfasst,
    wobei die Harzfolie aus der Gruppe ausgewählt ist, umfassend Polyesterharze, Polyolefinharze, Polyamidharze, Polyimidharze, Polyamid-Imid-Harze, Polyetheretherketonharze, Polyethersulfone, Polyphenylensulfidharze, Polycarbonatharze, Polyurethanharze, Ethylen-Vinylacetatharze, Fluorharze, wie Polytetrafluorethylen, Acrylharze oder Mischungen davon,
    wobei der druckempfindliche Klebstoff auf Kautschukbasis einen Naturkautschuk als Polymer auf Kautschukbasis umfasst.

2. Die Verwendung nach Anspruch 1, die so beschaffen ist, dass Bereiche, in denen die Lösungspenetration relativ stark visuell nachweisbar ist, und Bereiche, in denen sie relativ schwach visuell nachweisbar ist, vorhanden sind, wenn sie von der Außenfläschenseite der Maskierungsfolie aus betrachtet werden, wobei die relativ stark visuell nachweisbaren Bereiche und die relativ schwach visuell nachweisbaren Bereiche als Bereiche definiert sind, die einen Unterschied an Trübungswert von 15 % oder mehr besitzen.

3. Die Verwendung nach irgendeinem der Ansprüche 1 oder 2, besitzend einen Marker, der zur Bestimmung des Ausmaßes der Lösungspenetration verwendet wird.

4. Die Verwendung nach Anspruch 3, wobei der Naturkautschuk eine Mooney-Viskosität $MS_{1+4}$ (100°C) von 80 oder höher besitzt.

5. Die Verwendung nach irgendeinem der Ansprüche 1 bis 4, wobei die druckempfindliche Klebstoffschicht einen Klebrigmacher umfasst, wobei der Klebrigmacher 10 bis 85 Gew.-% der druckempfindlichen Klebstoffschicht ausmacht.

6. Die Verwendung nach irgendeinem der Ansprüche 1 bis 5, wobei die Maskierungsfolie auf eine Oberfläche eines kugelgestrahlten Metallteils geklebt wird.

7. Maskierungsverfahren für eine Behandlung mit einer chemischen Lösung, das das Verwenden einer Maskierungsfolie in einem Anodisierungsprozess eines Metallteils umfasst, wobei die Maskierungsfolie umfasst:

    ein Substrat, besitzend erste und zweite Flächen, und
    eine druckempfindliche Klebstoffschicht, angebracht auf der ersten Flächenseite des Substrats,
    wobei die Maskierungsfolie so beschaffen ist, dass das Eindringen einer chemischen Lösung in die Maskierungsfolie visuell nachweisbar ist, wenn sie von der Außenflächenseite der Maskierungsfolie, wie in der Beschreibung definiert, untersucht wird, wobei die Maskierungsfolie zumindest in einigen Bereichen einen Trübungswert von 90 % oder weniger besitzt, wobei das Substrat ein nicht-metallisches Substrat umfasst, und wobei die druckempfindliche Klebstoffschicht aus einem druckempfindlichen Klebstoff auf Kautschukbasis gebildet ist,

wobei der Trübungswert durch die Gleichung Th (%) = Td/Ttx100 ausgedrückt wird, wobei Th der Trübungswert (%) ist, Td die Durchlässigkeit für diffuses Licht ist und Tt die Gesamtlichtdurchlässigkeit ist, wobei der Trübungswert (%) auf der Grundlage von JIS-K7136 gemessen wird,

wobei das Substrat eine Harzfolie umfasst,

wobei die Harzfolie aus der Gruppe ausgewählt ist, umfassend Polyesterharze, Polyolefinharze, Polyamidharze, Polyimidharze, Polyamid-Imid-Harze, Polyetheretherketonharze, Polyethersulfone, Polyphenylensulfidharze, Polycarbonatharze, Polyurethanharze, Ethylen-Vinylacetatharze, Fluorharze, wie Polytetrafluorethylen, Acrylharze oder Mischungen davon, wobei der druckempfindliche Klebstoff auf Kautschukbasis einen Naturkautschuk als Polymer auf Kautschukbasis umfasst.

## Revendications

1. Utilisation d'une feuille de masquage pour un traitement par solution chimique dans un procédé d'anodisation d'un élément métallique, la feuille de masquage comprenant

un substrat ayant une première et une seconde face, et
une couche adhésive sensible à la pression placée du côté première face du substrat,
la feuille de masquage étant constituée de façon que la pénétration d'une solution chimique dans la feuille de masquage est visuellement détectable lorsqu'elle est inspectée depuis le côté face extérieure de la feuille de masquage, comme défini dans la spécification, dans laquelle la feuille de masquage a une valeur de voile de 90 % ou inférieure au moins dans certaines zones, dans laquelle le substrat comprend un substrat non métallique, et dans laquelle la couche adhésive sensible à la pression est formée d'un adhésif sensible à la pression à base de caoutchouc,
dans laquelle la valeur de voile est exprimée par l'équation Th (%) = Td/Ttx100, où Th est la valeur de voile (%), Td est la transmittance de la lumière diffusée, et Tt est la transmittance de la lumière totale, la valeur de voile (%) étant mesurée d'après JIS-K7136,
dans laquelle le substrat comprend un film de résine,
dans laquelle le film de résine est choisi dans le groupe comprenant les résines de polyester, les résines polyoléfiniques, les résines de polyamide, les résines de polyimide, les résines de polyamide-imide, les résines de polyétheréthercétone, les polyéthersulfones, les résines de poly(sulfure de phénylène), les résines de polycarbonate, les résines de polyuréthane, les résines d'éthylène-acétate de vinyle, les résines fluorées, telles que le polytétrafluoroéthylène, les résines acryliques, ou les mélanges de celles-ci,
dans laquelle l'adhésif sensible à la pression à base de caoutchouc comprend un caoutchouc naturel en tant que polymère à base de caoutchouc.

2. Utilisation selon la revendication 1, constituée de façon que des zones où la pénétration de la solution est relativement fortement visuellement détectable et des zones où elle est relativement faiblement visuellement détectable sont présentes lorsqu'on observe depuis le côté face extérieure de la feuille de masquage, dans laquelle les zones relativement fortement visuellement détectables et les zones relativement faiblement visuellement détectables sont définies comme étant des zones présentant une différence de valeur de voile qui est de 15 % ou supérieure.

3. Utilisation selon l'une quelconque des revendications 1 ou 2, ayant un marqueur utilisé pour déterminer l'étendue de la pénétration de la solution.

4. Utilisation selon la revendication 3, dans laquelle le caoutchouc naturel a une viscosité Mooney $MS_{1+4}$(100 °C) de 80 ou supérieure.

5. Utilisation selon l'une quelconque des revendications 1 à 4, dans laquelle la couche adhésive sensible à la pression comprend un agent donnant du collant, l'agent donnant du collant représentant 10 % à 85 % en poids de la couche adhésive sensible à la pression.

6. Utilisation selon l'une quelconque des revendications 1 à 5, dans laquelle on fait adhérer la feuille de masquage à une surface d'un élément métallique grenaillé.

7. Méthode de masquage pour un traitement par solution chimique, comprenant l'utilisation d'une feuille de masquage dans un procédé d'anodisation d'un élément métallique

la feuille de masquage comprenant
un substrat ayant une première et une seconde face, et
une couche adhésive sensible à la pression placée du côté première face du substrat,
la feuille de masquage étant constituée de façon que la pénétration d'une solution chimique dans la feuille de masquage est visuellement détectable lorsqu'elle est inspectée depuis le côté face extérieure de la feuille de masquage, comme défini dans la spécification, dans laquelle la feuille de masquage a une valeur de voile de 90 % ou inférieure au moins dans certaines zones, dans laquelle le substrat comprend un substrat non métallique, et dans laquelle la couche adhésive sensible à la pression est formée d'un adhésif sensible à la pression à base de caoutchouc,
dans laquelle la valeur de voile est exprimée par l'équation Th (%) = Td/Ttx100, où Th est la valeur de voile (%), Td est la transmittance de la lumière diffusée, et Tt est la transmittance de la lumière totale, la valeur de voile (%) étant mesurée d'après JIS-K7136,
dans laquelle le substrat comprend un film de résine,
dans laquelle le film de résine est choisi dans le groupe comprenant les résines de polyester, les résines polyoléfiniques, les résines de polyamide, les résines de polyimide, les résines de polyamide-imide, les résines de polyétheréthercétone, les polyéthersulfones, les résines de poly(sulfure de phénylène), les résines de polycarbonate, les résines de polyuréthane, les résines d'éthylène-acétate de vinyle, les résines fluorées, telles que le polytétrafluoroéthylène, les résines acryliques, ou les mélanges de celles-ci,
dans laquelle l'adhésif sensible à la pression à base de caoutchouc comprend un caoutchouc naturel en tant que polymère à base de caoutchouc.

[Fig. 1]

FIG.1

[Fig. 2]

FIG.2

[Fig. 3]

FIG.3

24  22  24  22  24      20

S                        S

[Fig. 4]

FIG.4

34    34    34        30

S                        S

32

[Fig. 5]

FIG.5

[Fig. 6]

FIG.6

[Fig. 7]

FIG.7

100

10b

10a

VIII ↓          ↓ VIII

1B

3A

10 { 1
    2

3

3B

[Fig. 8]

FIG.8

100

10b     10a

1B

1
10 {
2

3A

3

2b     2a

3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010126698 A
- JP 3738038 B
- JP H0234680 A
- US 2010252192 A1
- US 5998018 A
- JP 2014139299 A

**Non-patent literature cited in the description**

- **C. A. DAHLQUIST.** Adhesion : Fundamental and Practice. McLaren & Sons, 1966, 143